# EUROPEAN PATENT APPLICATION

(11) **EP 4 656 688 A1**
(43) Date of publication of application: **03.12.2025**
(21) Application number: 24747377.0
(22) Date of filing: 26.01.2024
(51) Int. Cl.: C08L 101/00, C08K 3/013, C08K 3/04, C08K 3/38, C08K 5/13, C08K 5/25, C08L 33/00, C08L 63/00, C08L 83/04, C09K 5/14

(54) **RESIN COMPOSITION AND HEAT DISSIPATION MEMBER**

(30) Priority: 27.01.2023 JP 2023011405
(71) Applicant: Sekisui Chemical Co., Ltd., Osaka-shi, Osaka 530-8565 (JP)
(72) Inventor: TAKAHASHI, Ryousuke, Mishima-gun, Osaka 618-0021 (JP); URAYAMA, Takahiro, Mishima-gun, Osaka 618-0021 (JP); KAGE, Yuuto, Mishima-gun, Osaka 618-0021 (JP); INUI, Osamu, Mishima-gun, Osaka 618-0021 (JP); NISHIZAWA, Hidehito, Mishima-gun, Osaka 618-0021 (JP); YOSHIOKA, Tetsuro, Mishima-gun, Osaka 618-0021 (JP); ASANO, Motohiko, Mishima-gun, Osaka 618-0021 (JP)
(74) Representative: Ter Meer Steinmeister & Partner
(86) International application number: PCT/JP2024/002458
(87) International publication number: WO 2024/158053

(57) **Abstract**

There is provided a resin composition including a resin having an alkyl group on a side chain of a molecule thereof, an inorganic filler and an antioxidant, wherein the antioxidant is either of a hydrazide-based antioxidant or a combination of a hindered phenol-based antioxidant and an organic metal chelate-based antioxidant.

## Description

### Technical Field

The present invention relates to a heat-dissipating member to be used in electronic devices or the like, and a resin composition for forming the heat-dissipating member or the like.

### Background Art

In electronic devises, since integrated electronic components generate heat, which causes failures, there are sometimes installed heat-dissipating members for dissipating heat generated by the electronic components outside the devices. In recent years, along with the performance enhancement and the size reduction of electric devices, there is demanded a technology of keeping the electric insulation and efficiently dissipating heat generated by driving. As a method of making thermal conduction high, dense filling of a filler has been carried out. For example, Patent Literature 1 discloses a thermal conductive silicone composition containing 200 to 2,500 parts by mass of a thermal conductive filler with respect to 100 parts by mass of an organopolysiloxane.

### Citation List

### Patent Literature

PTL1: JP 6194861

### Summary of Invention

### Technical Problem

Conventional thermal conductive silicone compositions, however, in the case of being used over a long period in high-temperature environments, cannot sufficiently retain the heat dissipation performance.

Then, the present invention has an object to provide a resin composition high in the long-term reliability even in high-temperature environments.

### Solution to Problem

As a result of exhaustive studies, the present inventors have found that in the case where a resin composition is used over a long period in high-temperature environments, the cause of becoming less able to retain the heat dissipation performance is the occurrence of oxidative deterioration due to an influence of metal impurities, particularly iron ions and manganese ions, present on the surface of a filler densely loaded in the resin composition. On this finding, it has been found that the above problem can be solved by adding an antioxidant having a specific structure.

That is, the present invention provides the following [1] to [7].

[1] A resin composition comprising a matrix resin, an inorganic filler and an antioxidant, the antioxidant being either of a hydrazide-based antioxidant or a combination of a hindered phenol-based antioxidant and a chelate-based antioxidant.
[2] The resin composition according to [1], wherein the chelate-based antioxidant is a hydrazide-based antioxidant.
[3] The resin composition according to [1] or [2], wherein the matrix resin has an alkyl group on a side chain of a molecule thereof.
[4] The resin composition according to any one of [1] to [3], wherein the inorganic filler comprises at least one selected from the group consisting of diamond and cubic boron nitride.
[5] The resin composition according to any one of [1] to [4], wherein the matrix resin is at least one selected from the group consisting of a silicone resin, an epoxy resin and an acrylic resin.
[6] A heat-dissipating member, being formed of the resin composition according to any one of [1] to [5].
[7] An electronic device, comprising an electronic component and the heat-dissipating member according to [6] disposed on the electronic component.

### Advantageous Effect of Invention

According to the present invention, there can be provided a resin composition high in the long-term reliability even in high-temperature environments.

### Brief Description of Drawings

[Fig. 1] Fig. 1 is schematic perspective diagrams showing shapes of inorganic fillers.
[Fig. 2] Fig. 2 is schematic perspective diagrams showing shapes of polyhedral fillers among inorganic fillers.

### Description of Embodiments

### [Resin composition]

Hereinafter, the resin composition of the present invention will be described in detail.

The resin composition of the present invention contains a matrix resin, an inorganic filler and an antioxidant. Hereinafter, each of these components will be described in detail.

### (Antioxidant)

The resin composition of the present invention contains the antioxidant. The antioxidant is either of a hydrazide-based antioxidant or a combination of a hindered phenol-based antioxidant and a chelate-based antioxidant. These specific antioxidants can suppress oxidative deterioration of the resin, by capturing metal cations, particularly iron ions and manganese ions, being metal impurities on the surface of the inorganic filler, by capturing radicals generated due to the metal impurities, or by the like. Hence, the resin composition containing the inorganic filler, due to containing the above specific antioxidant, can exhibit high long-term reliability when used in high-temperature environments. Therefore, even when the resin composition is used in high-temperature environments, the deterioration and the hardness rise are suppressed. Further, even when the resin composition is stored for a long period at relatively high temperature, the deterioration can be suppressed and the storage stability becomes good.

The resin composition of the present invention, as described above, in one embodiment, contains a hindered phenol-based antioxidant and a chelate-based antioxidant. In the present invention, concurrent use of the hindered phenol-based antioxidant and the chelate-based antioxidant enables the long-term reliability when the resin composition is used in high-temperature environments to be sufficiently improved. Although the principle thereof is not clear, it is presumed that the metal cations adhered on the inorganic filler surface are chelated and inactivated with the chelate-based antioxidant and the hindered phenol-based antioxidant captures the radicals, to thereby prevent the oxidation of the matrix resin, whereby the long-term reliability can be sufficiently improved.

### <Hindered phenol-based antioxidant>

The hindered phenol-based antioxidant is a compound in which a phenyl group has a hindering group such as a t-butyl group on a carbon atom adjacent to a carbon atom to which a phenolic hydroxyl group is bound. Here, the phenolic hydroxyl group is a hydroxyl group bound directly to a phenyl group.

The molecular weight of the hindered phenol-based antioxidant is preferably 300 or higher, more preferably 500 or higher and still more preferably 700 or higher. Due to that the molecular weight of the hindered phenol-based antioxidant is the above lower limit values or higher, it becomes difficult for the hindered phenol-based antioxidant in the resin composition to volatilize and even in use of the resin composition in high-temperature environments, it becomes easy for the effect of the hindered phenol-based antioxidant to develop over a long period. Then, the molecular weight of the hindered phenol-based antioxidant is, from the viewpoint of making it easy for the oxidative deterioration of the resin to be suppressed by suitably capturing the radicals, preferably 2,000 or lower, more preferably 1,500 or lower and still more preferably 1,200 or lower.

In the hindered phenol-based antioxidant, since the hydroxyl group (phenolic hydroxyl group) bound to the phenyl group generally captures radicals and prevents oxidation, a larger number thereof is better. Accordingly, it suffices when the number of the phenolic hydroxyl group is 1 or larger, but the number is preferably 2 or larger and more preferably 3 or larger. The number of the phenolic hydroxyl group may be, though limited to, for example, 6 or smaller, or 4 or smaller.

The phenol equivalent of the hindered phenol-based antioxidant is preferably 140 or higher, more preferably 160 or higher and still more preferably 200 or higher. Then, the phenol equivalent is, from the viewpoint of making it easy for the oxidative deterioration of the resin to be suppressed by suitably capturing the radicals, preferably 1,000 or lower, more preferably 600 or lower and still more preferably 300 or lower. Among these, it is especially preferable that the molecular weight of the hindered phenol-based antioxidant is 700 or higher and the phenol equivalent thereof is 300 or lower.

Here, the phenol equivalent is a value obtained by dividing the molecular weight of the hindered phenol-based antioxidant by the number of the phenolic hydroxyl group one molecule of the hindered phenol-based antioxidant has.

The hindered phenol-based antioxidant specifically includes 1,3,5-tris(3,5-di-t-butyl-4-hydroxybenzyl)-1,3,5-triazine-2,4,6(1H,3H,5H)-trione, 4,4',4"-(l-methylpropanyl-3-idene)tris(6-tert-butyl-m-cresol), 1,1,3-tris-(2'-methyl-4'-hydroxy-5'-t-butylphenyl)-butane, 4,4'-butylidene-bis-(2-t-butyl-5-methylphenol), stearyl 3-(3,5-di-t-butyl-4-hydroxyphenyl)propionate, pentaerythritol tetrakis[3-(3,5-di-t-butyl-4-hydroxyphenyl)propionate], 3,9-bis [2-[3-(3-t-butyl-4-hydroxy-5-methylphenyl)propionyloxy]-1,1-dimethylethyl]-2,4,8,10-tetraoxaspiro[5.5]undecane, 1,3,5-tris(3,5-di-t-butyl-4-hydroxyphenylmethyl)-2,4,6-trimethylbenzene, 1,3,5-tris(3-hydroxy-4-t-butyl-2,6-dimethylbenzyl)-1,3,5-triazine-2,4,6(1H,3H,5H)-trione, 2,2'-methylenebis(6-t-butyl-4-ethylphenol), 2,2'-thiodiethylbis-(3,5-di-t-butyl-4-hydroxyphenyl)-propionate, N,N-hexamethylenebis(3,5-di-t-butyl-4-hydroxy-hydrocinnamamide), octadecyl-3-(3,5-di-t-butyl-4-hydroxyphenyl) propionate, 4,6-bis(dodecylthiomethyl)-o-cresol, calcium salt of 3,5-di-t-butyl-4-hydroxybenzylphosphonic acid mono-ethyl ester, 4,6-bis(octylthiomethyl)-o-cresol, 6,6'-di-tert-butyl-4,4'-butylidenedi-m-cresol, ethylenebisoxybisethylene bis[3-(3-methyl-4-hydroxy-5-t-butylphenyl)propionate], 1,6-hexanediol bis[3-(3,5-di-t-butyl-4-hydroxyphenyl)propionate], 2,4-bis-(n-octylthio)-6-(4-hydroxy-3,5-di-t-butylanilino)-1,3,5-triazine, 2,2'-thio-bis-(6-t-butyl-4-methylphenol), 2,5-di-t-amylhydroquinone, 2,6-di-t-butyl-4-nonylphenol, 2,2'-isobutylidene-bis-(4,6-dimethyl-phenol), 2,2'-methylene-bis-(6-(1-methyl-cyclohexyl)-p-cresol), 2,4-dimethyl-6-(1-methyl-cyclohexyl)-phenol, 2,6-di-tert-butyl-4-methylphenol, 3-(3,5-di-tert-butyl-4-hydroxyphenyl)-N'-[3-(3,5-di-tert-butyl-4-hydroxyphenyl)propanoyl]propane hydrazide and the like.

Commercially available products of the hindered phenol-based antioxidant are also usable. Examples of the commercially available products include ADK Stab AO-20, AO-30, AO-40, AO-50, AO-60, AO-80, AO-330, and CDA-10, manufactured by Adeka Corp., KEMINOX 101, 179, 76, and 9425, manufactured by Chemipro Kasei Kaisha, Ltd., SEENOX 224M, manufactured by Shipro Kasei Kaisha, Ltd., Irganox 1010, 1035, 1076, 1098, 1135, 1330, 1726, 1425WL, 1520L, 245, 259, 3114, 5057 and 565, manufactured by BASF Japan Ltd., and Cyanox CY-1790 and CY-2777, manufactured by Sun Chemical Co. Ltd.

### <Chelate-based antioxidant>

The chelate-based antioxidant to be concurrently used with the hindered phenol-based antioxidant is desirably one having no hindered phenol structure, and the examples thereof includes hydrazide-based antioxidants and organic chelate-based antioxidants other than the hydrazide-based antioxidants (hereinafter, referred to also simply as "organic chelate-based antioxidants"). Among these, a hydrazide-based antioxidant is preferable.

The chelate-based antioxidant suffices when being an organic chelate agent, and the molecular weight thereof is preferably 80 or higher, more preferably 90 or higher and still more preferably 100 or higher. When the molecular weight of the chelate-based antioxidant is the above lower limit values or higher, metal impurities such as manganese on the inorganic filler surface are inactivated and it becomes easy for the long-term reliability of the resin composition in high-temperature environments to be enhanced. The molecular weight of the chelate-based antioxidant is, from the viewpoint of making it easy for the metal impurities to be suitably inactivated, preferably 700 or lower, more preferably 600 or lower and still more preferably 550 or lower.

### <<Hydrazide-based antioxidant>>

The hydrazide-based antioxidant suffices when being a compound having a hydrazide structure, but it suffices when the hydrazide-based antioxidant to be used is, as described above, one having no hindered phenol structure. Then, the hydrazide-based antioxidant is preferably a dihydrazide compound which has two hydrazide structures. Specifically, the hydrazide-based antioxidant is preferably a compound represented by the following general formula (1). 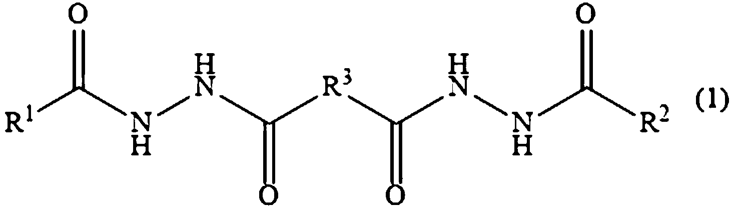 wherein each of R¹ and R² independently denotes an organic group having 1 to 20 carbon atoms; and R³ denotes a divalent hydrocarbon group having 1 to 20 carbon atoms.

In the above formula (1), R³ is preferably a saturated aliphatic group and more preferably -(CH₂)ₙ-. The letter of n denotes an integer of 1 to 20, but is preferably 2 to 15, more preferably 4 to 14 and still more preferably 5 to 12. R¹ and R² may be a hydrocarbon group, but may be a hydrocarbon group having a heteroatom such as a nitrogen atom, an oxygen atom or a sulfur atom. In the case where R¹ and R² have a heteroatom, R¹ and R² include hydrocarbon groups having an ether bond, an ester bond, an amido bond, a thiol bond, a urethane bond, a urea bond, a hydroxyl group or the like. The number of carbon atoms of R¹ and R² is preferably 2 to 15, more preferably 3 to 10 and still more preferably 5 to 8. R¹ and R² are, from the viewpoint of enhancing the long-term reliability, preferably an aromatic group having a phenolic hydroxyl group.

In the above formula (1), each of R¹ and R² may be an aliphatic group such as an alkyl group or a hydroxyalkyl group, or may be an aromatic group. The aromatic group suffices when having an aromatic ring, but includes aryl groups such as a phenyl group, a naphthyl group, a methylphenyl group, an ethylphenyl group, a benzyl group, a hydroxyphenyl group, a hydroxynaphthyl group, a hydroxymethylphenyl group and a hydroxyethylphenyl group, and aralkyl groups such as a benzyl group and a hydroxybenzyl group. Among these, it is preferable that both of R¹ and R² are aromatic groups having a phenolic hydroxyl group, and among these, a hydroxyphenyl group is especially preferable.

Examples of the hydrazide-based antioxidant include N'1,N'12-bis(2-hydroxybenzoyl)dodecane dihydrazide, 1,9-decanedicarboxylic di(N'-salicyloylhydrazide), adipic dihydrazide, sebacic dihydrazide, dodecane dihydrazide, isophthalic dihydrazide and salicylic dihydrazide.

Commercially available products of the hydrazide-based antioxidant are also usable. Examples of the commercially available products include ADK Stab CDA-6S, ZS-90 and ZS-91, manufactured by Adeka Corp.

The organic chelate-based antioxidant is not especially limited as long as being a compound capable of chelating metals, but examples thereof include phthalocyanine-based compounds such as phthalocyanine; benzimidazole-based compounds such as benzimidazole and 2-methylbenzimidazole; benzothiazole-based compounds such as 2-alkyldithiobenzothiazoles and 2-(N,N-dialkylthiocarbamoyl)benzothiazoles; thiadiazole-based compounds such as 2,5-bis(alkyldithio)-1,3,4-thiadiazoles and 2,5-bis(N,N-dialkylthiocarbamoyl)-1,3,4-thiadiazoles; pyrazole-based compounds such as pyrazole and 3,5-dimethylpyrazole; triazole-based compounds such as 2-hydroxy-N-1H-1,2,4-triazol-3-yl-benzamide; and 1,3,5-triazine-2,4,6-triamine, ethylenediaminetetraacetic acid, N,N'-salicylidene-1,2-propanediamine, alizarin, and tetraalkylthiuram disulfides.

Among these, preferable are phthalocyanine-based compounds, benzimidazole-based compounds and pyrazole-based compounds.

Commercially available products of the organic chelate-based antioxidant is also usable. Examples of the commercially available products include ADK Stab CDA-1 and ZS-27, manufactured by Adeka Corp., and EDTA and phthalocyanine, manufactured by Tokyo Chemical Industry Co. Ltd.(TCI).

In one embodiment of the present invention, although the resin composition contains the hydrazide-based antioxidant as the antioxidant, in this case, even when the resin composition contains no hindered phenol-based antioxidant, the long-term reliability can sufficiently be improved. The principle thereof is not clear, but it is presumed that the hydrazide-based antioxidant can sufficiently inactivate metal impurities adhered on the inorganic filler surface, and without the hindered phenol-based antioxidant, the long-term reliability can thereby be sufficiently improved.

However, from the viewpoint of enhancing the long-term reliability, it is more preferable that the resin composition of the present invention contains, as the antioxidant, in addition to the hydrazide-based antioxidant, the hindered phenol-based antioxidant.

The content of the antioxidant in the resin composition of the present invention is, based on the total mass of components excluding the inorganic filler (hereinafter, referred to also as "resin components") in the resin composition, preferably 0.01% by mass or higher, more preferably 0.015% by mass or higher and still more preferably 0.1% by mass or higher. When the content of the antioxidant is the above lower limit values or higher, even when the resin composition is exposed to the high-temperature environments, the long-term reliability can be enhanced. The content of the antioxidant is, from the viewpoint of attaining the effect corresponding to the content which is not excessive, based on the total mass of the resin components, preferably 4% by mass or lower, more preferably 2% by mass or lower and still more preferably 1% by mass or lower.

Then, in the case where the antioxidant contains a combination of the hindered phenol-based antioxidant and the chelate-based antioxidant, the blend ratio (hindered phenol-based antioxidant/chelate-based antioxidant) of the hindered phenol-based antioxidant to the chelate-based antioxidant is, in mass ratio, preferably 1/3 or higher and 1/0.1 or lower, more preferably 1/2 or higher and 1/0.2 or lower and still more preferably 1/9 or higher and 1/1 or lower. Due to that the hindered phenol-based antioxidant/chelate-based antioxidant is in the above range, the blending balance between the hindered phenol-based antioxidant and the chelate-based antioxidant is made suitable and it becomes easy for the effect by the antioxidant to be developed. Then, it is preferable that the content of the chelate-based antioxidant is higher than the content of the hindered phenol-based antioxidant, and accordingly, it is also preferable that the blend ration is lower than 1/1.

### (Matrix resin)

The matrix resin is a resin component to hold the inorganic filler. The matrix resin may be a curable resin, or may also be a non-curable matrix resin such as a thermoplastic resin. Further, the matrix resin may be an elastomer resin. The curable resin may be any of a moisture-curable resin, a thermocurable resin and a photocurable resin, but a thermocurable resin is preferable. The matrix resin is preferably a liquid component. The liquid resin component may be one which turns to a solid by being cured, or one which is non-curable and liquid as it is in a heat-dissipating member. Then, the liquid component is a component which is liquid at room temperature (25°C) and at atmospheric pressure (1 atm). In the case of the curable resin, the matrix resin may be either of a one-component curing type and a two-component curing type, but is preferably a two-component curing type. The two-component curing type becomes a resin composition by mixing two components of a first component containing a base resin and a second component containing a curing agent. The two-component curing type is desirably cured by mixing the first liquid and the second liquid, for example, at room temperature. The matrix resin suffices when using a resin other than a compound to be used as the dispersant described later; accordingly, it suffices when the resin having no hydrolyzable silyl group such as a silanol group and an alkoxysilyl group is used.

It is preferable that the matrix resin constituting the resin composition of the present invention has an alkyl group on a side chain of the molecule. Here, the matrix resin having an alkyl group on a side chain of the molecule is the matrix resin in which at least one side chain among side chains bound to the main chain contains an alkyl group. The main chain may contain a cyclic structure. Then, in the case where the matrix resin is, as described later, a curing type, the matrix resin desirably has an alkyl group on a moiety to become a side chain after being cured.

For example, in the case of an alkyl methacrylate (CH₂=C(CH₃)COOR, R = an alkyl group), since the carbon double bond site (CH₂=C) becomes the main chain, the methyl group bound to CH₂=C and R correspond to the alkyl groups present on side chains of the molecule.

For example, in the case of the epoxy resin, since a continuous molecular chain present between two epoxy groups is the main chain, an alkyl group bound to the main chain and an alkyl group contained in a molecular chain (side chain) bound to the main chain correspond to the alkyl groups. In a bisphenol A type epoxy resin as an example, two methyl groups bound to the center carbon of a bisphenol structure (-C₆H₄-C-C₆H₄-) constituting the main chain correspond to the alkyl groups of the side chains.

Although the matrix resin having an alkyl group on its molecule side chain generally easily oxidatively deteriorates by metal cations, in the present invention, as described above, by making a predetermined antioxidant to be contained, the oxidative deterioration of the resin is suppressed and the long-term reliability of the resin composition in high-temperature environments can be enhanced.

The matrix resin includes a silicone resin, an epoxy resin, an acrylic resin, a urethane resin, a phenol resin, a polyester resin, an olefin resin and the like.

Then, the matrix resin may be an elastomer resin, and the elastomer resin specifically includes ethylene-propylene-diene rubber, ethylene-propylene rubber, natural rubber, polyisoprene rubber, polyester-based thermoplastic elastomer, polyurethane-based thermoplastic elastomer, styrene-based thermoplastic elastomer, olefin-based thermoplastic elastomer and the like. The elastomer resin may be liquid or may be solid.

The matrix resin may be used singly in one kind, or may be used concurrently in two or more kinds.

The matrix resin to be used in the present invention is preferably at least any of a silicone resin, an epoxy resin, an acrylic resin, an olefin resin and a urethane resin, more preferably, among these, at least one selected from the group consisting of a silicone resin, an olefin resin, an epoxy resin and an acrylic resin, still more preferably at least one selected from the group consisting of a silicone resin, an epoxy resin and an acrylic resin, and especially preferably a silicone resin.

### <Silicone resin>

Specific examples of the silicone resins include curable silicone resins. The curable silicone resin may be either a condensation-curable silicone resin or an addition reaction-curable silicone resin, but is preferably an addition reaction-curable silicone resin.

It is preferable that the curing type silicone resin is composed of a silicone resin constituting a base resin and a silicone resin constituting a curing agent that cures the base resin. Then, in the case of the addition reaction-curable silicone resin, a silicone resin to be used as its base resin is preferably an organopolysiloxane having an alkenyl group. The organopolysiloxane having an alkenyl group suffices when having one or more alkenyl groups, but is more preferably one having two or more alkenyl groups, and one having 2 to 10 alkenyl groups, or the like may be used.

The organopolysiloxane to be used as the base resin may be a straight-chain one or a branched-chain one, or may be a mixture of a straight-chain one and a branched-chain one, but is preferably a straight-chain type.

The alkenyl group in the base resin may be made to be contained on an end or a side chain of the molecular chain of the polysiloxane structure of the base resin, or may be made to be contained on both of an end and a side chain thereof, but is preferably made to be contained at least on an end thereof, more preferably made to be contained on both ends thereof, and still more preferably made to be contained only on both ends thereof.

The alkenyl group is not especially limited, but examples thereof include ones having 2 to 8 carbon atoms, and include a vinyl group, an allyl group, a butenyl group, a pentenyl group, a hexenyl group, a heptenyl group and an octenyl group; and among these, from the viewpoint of easiness of synthesis and reactivity, and the like, a vinyl group is preferable. Then, the alkenyl group is desirably one bound directly to a silicon atom.

In the organopolysiloxane of the base resin, rest groups bound to a silicon atom other than the alkenyl group include hydrocarbon groups optionally having substituents. The hydrocarbon groups optionally having substituents include one having about 1 to 20 carbon atoms, and specifically include alkyl groups having 1 to 20 carbon atoms, halogenated alkyl groups having 1 to 20 carbon atoms, aryl groups having 6 to 20 carbon atoms, aralkyl groups having 7 to 20 carbon atoms and the like.

The alkyl group may be a straight-chain one or a branched-chain one, or may have a cyclic structure. The alkyl group more specifically includes straight-chain alkyl groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group and an eicosyl group, branched-chain alkyl groups such as an isopropyl group, a tertiary-butyl group, an isobutyl group, 2-methylundecyl group and 1-hexylheptyl group, and cyclic alkyl groups such as a cyclopentyl group, a cyclohexyl group and a cyclododecyl group.

The halogenated alkyl group includes a chloromethyl group, a 3,3,3-trichloropropyl group, a 3-chloropropyl group and the like. The aryl group includes a phenyl group, a tolyl group, a xylyl group and the like. The aralkyl group includes a benzyl group, a phenethyl group, a 2-(2,4-6-trimethylphenyl)propyl group and the like.

It is preferable that the organopolysiloxane constituting the base resin has an alkyl group on a side chain thereof. Accordingly, the above rest groups are preferably alkyl groups, and are, from the viewpoint of easiness of synthesis, and the like, preferably methyl groups. Then, preferably, 80% by mol or more of the rest groups bound to a silicon atom are methyl groups; more preferably, 90% by mol or more; and still more preferably, 100% by mol. Then, it is desirable that the organopolysiloxane constituting the base resin has no hydrogen atom as the rest groups bound to a silicon atom, that is, has no hydrosilyl group.

The base resin may be used singly in one kind, or may be used concurrently in two or more kinds.

The viscosity at 25°C of the base resin is not especially limited, but is preferably 20 mPa·s or higher and 100,000 mPa·s or lower. By making the viscosity of the base resin be the above lower limit value or higher, the crosslinking density of a cured material is prevented from becoming too high and it becomes easy for the flexibility after being cured to be retained. Further, by making the viscosity to be the above upper limit value or lower, the resin composition can be prevented from having a high viscosity. Further, by making the viscosity to be in the above range, the molecular weight of the base resin is made to be suitable and it becomes easy for the reactivity to be made suitable. The viscosity at 25°C of the base resin is more preferably 40 mPa·s or higher and 10,000 mPa·s or lower and still more preferably 60 mPa·s or higher and 1,000 mPa·s or lower.

The hydrogenorganopolysiloxane to be used as the curing agent may be a straight-chain one or a branched-chain one, and may be a mixture of a straight-chain one and a branched-chain one. The hydrogenorganopolysiloxane suffices when having at least one Si-H group, but preferably has two or more Si-H groups and may have, for example, about 2 to 10 Si-H groups. Further, it is also preferable that the hydrogenorganopolysiloxane has Si-H on an end thereof.

In the hydrogenorganopolysiloxane, rest groups bound to a silicon atom other than the Si-H include hydrocarbon groups optionally having substituents. The hydrocarbon groups optionally having substituents include ones having about 1 to 20 carbon atoms, and specifically include alkyl groups having 1 to 20 carbon atoms, halogenated alkyl groups having 1 to 20 carbon atoms, aryl groups having 6 to 20 carbon atoms, aralkyl groups having 7 to 20 carbon atoms and the like. The details of the alkyl group, the halogenated alkyl group, the aryl group and the aralkyl group are as described in the above description of the base resin.

It is preferable that the hydrogenorganopolysiloxane has an alkyl group on a side chain thereof. Accordingly, the rest groups are preferably alkyl groups, and are, from the viewpoint of easiness of synthesis, and the like, preferably methyl groups. Then, preferably, 80% by mol or more of the rest groups bound to a silicon atom are methyl groups; more preferably, 90% by mol or more; and still more preferably, 100% by mol.

The curing agent may be used singly in one kind, or may be used concurrently in two or more kinds.

The viscosity at 25°C of the curing agent is preferably 20 mPa·s or higher and 100,000 mPa·s or lower. By making the viscosity of the curing agent to be the above lower limit value or higher, the crosslinking density is prevented from becoming too high and it becomes easy for the flexibility after being cured to be retained and simultaneously, the resin composition is prevented from having a high viscosity. Further, by making the viscosity to be in the above range, the molecular weight of the curing agent is made to be suitable and it becomes easy for the reactivity to be made suitable. The viscosity at 25°C of the curing agent is more preferably 30 mPa·s or higher and 10,000 mPa·s or lower and still more preferably 40 mPa·s or higher and 1,000 mPa·s or lower.

The silicone resin may be, for example, a silicone oil. It is preferable that the silicone oil has an alkyl group on a side chain thereof. The silicone oil includes methylphenylsilicone oil, dimethylsilicone oil, modified silicone oil and the like.

The silicone oil is liquid at the blending time at room temperature and atmospheric pressure, and also at the usage time, is a liquid or gelatinous component. That is, the silicone oil is not cured with a curing agent or the like, and even when being cured, after being cured, is liquid or gelatinous, that is, substantially non-curable. Therefore, when the silicone oil is used, as the matrix resin, singly or in a relatively high blending proportion, a heat-dissipating member to be formed of the resin composition can be made pasty.

The viscosity at 25°C of the silicone oil to be contained in the resin composition is preferably 5 mPa·s or higher and 1,000 mPa·s or lower, more preferably 30 mPa·s or higher and 700 mPa·s or lower and still more preferably 100 mPa·s or higher and 600 mPa·s or lower. When the viscosity of the silicone oil is made to be in the above range, since the viscosity of the resin composition is made to be in the predetermined range and the coatability of the resin composition is made good, and simultaneously, the resin composition after being coated can be held in a certain shape, it becomes easy for the resin composition to be disposed on an electronic component or the like. Further, it becomes easy for a filler such as diamond to be blended in a large amount while the filler is suitably dispersed.

Here, the viscosity of the silicone resin can be measured by using a viscometer (BROOKFIELD rotational viscometer DV-E) and using a rotator of Spindle No. 14 at a rotation speed of 5 rpm at a measurement temperature of 25°C.

In the case where the resin composition is a curing type, the resin composition, as described above, may be a one-component curing type or a two-component curing type. The resin composition, in the case of the two-component curing type, can be obtained by mixing a first component having a silicone resin to become the base resin and a second component having a silicone resin to become the curing agent. Therefore, with regard to the silicone resins, in the case of the curing type such as the one-component curing type or the two-component curing type, it is preferable that the resin composition contains both of the organopolysiloxane having an alkenyl group and the organohydrogenpolysiloxane.

The curing type resin composition may contain, as the silicone resin, a non-curable organopolysiloxane, and may contain, in addition to the above organopolysiloxane having an alkenyl group and organopolysiloxane having hydrosilyl groups, the silicone oil or the like. The resin composition, of course, may be a non-curing type silicone resin composition, and in such a case, as the silicone resin, for example, the silicone oil may be used singly.

### <Olefin resin>

The olefin resin includes polypropylene resins, polyethylene resins, poly(1-)butene resins, polypentene resins and the like. Among these, polyethylene resins and polypropylene resins are preferable.

The polyethylene resins are not especially limited, and examples thereof include low-density polyethylene, medium-density polyethylene, high-density polyethylene, linear low-density polyethylene and the like. The linear low-density polyethylene includes ethylene/α-olefin copolymers such as ethylene/1-butene copolymers, ethylene/1-hexene copolymers, ethylene/4-methyl-1-pentene copolymers, and ethylene/1-octene copolymers.

In the linear low-density polyethylene, it is preferable that a part of structural units originated from α-olefin other than ethylene is an alkyl group constituting a side chain. In this case, as a polyethylene resin other than the linear low-density polyethylene, the polyethylene resin whose part of its molecular structure is branched is desirably used and the branched moiety can be said to be an alkyl group of the side chain.

The polypropylene resins are not especially limited, and examples thereof include propylene homopolymers (homopolypropylene) and copolymers of propylene with another olefin. The copolymers of propylene with the other olefin may be any of block copolymers, random copolymers and random block copolymers, but random copolymers (random polypropylene) are preferable.

Examples of the other olefin to be copolymerized with propylene include α-olefins such as ethylene, 1-butene, 1-pentene, 4-methyl-1-pentene, 1-hexene, 1-octene, 1-nonene and 1-decene, and among these, ethylene is preferable. Accordingly, an ethylene-propylene random copolymer is more preferable. In the polypropylene resin, the structural unit originated from the other olefin suffices if being, for example, 10% by mass or less, and is preferably 1 to 8% by mass and more preferably 2 to 6% by mass.

In the polypropylene resin, it is preferable that a part of a structural unit originated from propylene constitutes an alkyl group (methyl group) of a side chain. Also in the case where an olefin other than ethylene is used, it is preferable that a part of a structural unit originated from the olefin other than ethylene constitutes an alkyl group of a side chain.

Also in the poly(1-)butene resin and the polypentene resin, it is preferable that a part of a structural unit originated from (1-)butene and a part of a structural unit originated from pentene constitute an alkyl group of a side chain.

### <Epoxy resin>

As the epoxy resin to be used as the matrix resin, an epoxy compound having at least one epoxy group, preferably two or more epoxy groups, can be used. The epoxy compound is a curable resin, and usually a thermocurable resin.

Examples of the epoxy compound include bisphenol type, novolac type, naphthalene type, triphenolalkane type, biphenyl type, and alicyclic type ones, and halides of these, and hydrogenated compounds of these. As the epoxy compound, it is preferable to use one having an alkyl group on a side chain thereof.

Then, as the epoxy resin, an epoxy compound may be used singly, but an epoxy resin having the above epoxy compound as its base resin and further a curing agent added thereto is used. As the curing agent, a polyaddition type one or a catalyst type one is used. Examples of the polyaddition type curing agent include polyamine-based curing agents, acid-anhydride-based curing agents, polyphenol-based curing agents, polymercaptan and dicyandiamide. Examples of the catalyst type curing agent include tertiary amines, imidazoles and Lewis acid complexes. These may be used singly in one kind, or may be used concurrently in two or more kinds.

In the case of using the epoxy resin, the resin composition may be a two-component curing type, that is, may be the type in which a first component containing a base resin and a second component containing a curing agent are mixed to thereby be cured.

The content of the curing agent in the case of using the curing agent is, with respect to 100 parts by mass of the epoxy resin, preferably 1 part by mass or higher and 25 parts by mass or lower, more preferably 3 parts by mass or higher and 20 parts by mass or lower, and still more preferably 5 parts by mass or higher and 15 parts by mass or lower. When the content of the curing agent is in the above lower limit values or higher, it becomes easier for the epoxy resin to be fully cured. Then, when the content of the curing agent is the above upper limit values or lower, it becomes difficult for a surplus curing agent not participating in curing to be generated and the effect corresponding to the content of the curing agent can be attained.

### <Acrylic resin>

As the acrylic resin to be used as the matrix resin, for example, a photocurable one is used. The acrylic resin suffices when being a component to constitute an acrylic polymer by being cured, and examples thereof include various acrylic compounds including (meth)acrylates such as alkyl (meth)acrylates and hydroxyalkyl (meth)acrylates, (meth)acrylic acid, (meth)acrylamides and urethane (meth)acrylate. Then, the acrylic resin may contain a vinyl monomer and the like copolymerizable with the above acrylic compounds. It is preferable that the acrylic resin has an alkyl group on a side chain thereof. In the case of obtaining the acrylic resin having an alkyl group on a side chain thereof, the acrylic resin having an alkyl group on a side chain thereof can be obtained by using, as the acrylic compound to be used as the matrix resin, at least partially, a methacrylate, methacrylic acid, an alkyl (meth)acrylate or the like.

The content (filling rate) of the matrix resin in the resin composition is, with respect to the total volume of the resin composition, preferably 5% by volume or higher and 19.9% by volume or lower, more preferably 8% by volume or higher and 17% by volume or lower, and still more preferably 10% by volume or higher and 15% by volume or lower. When the content of the matrix resin is these lower limit values or higher, the inorganic filler dispersed in the resin can be suitably dispersed and held in the matrix resin. Then, by making the content to be these upper limit values or lower, the inorganic filler and the antioxidant can be blended in certain amounts or more in the resin composition.

### (Inorganic filler)

Examples of the inorganic filler include carbides, nitrides, oxides, hydroxides and carbonaceous materials.

Examples of the carbides include silicon carbide, boron carbide, aluminum carbide, titanium carbide and tungsten carbide. Examples of the nitrides include silicon nitride, boron nitride, aluminum nitride, gallium nitride, chromium nitride, tungsten nitride, magnesium nitride, molybdenum nitride and lithium nitride. Examples of the oxides include metal oxides such as aluminum oxides like alumina and boehmite, zinc oxide, iron oxide, magnesium oxide, titanium oxide, cerium oxide and zirconium oxide, and silicon oxide (silica). Examples of the hydroxides include metal hydroxides such as aluminum hydroxide, calcium hydroxide and magnesium hydroxide. Examples of the carbonaceous materials include diamond, carbon black, graphite, graphene, fullerene, carbon nanotubes and carbon nanofibers. As the diamond, nanodiamond, as-grown diamond, crushed diamond obtained by crushing as-grown diamond, and the like can be used. As the inorganic filler, talc, which is silicate salt mineral, and the like are also usable. As the boron nitride, a cubic boron nitride is preferably used.

The inorganic filler is preferably nitrides, metal oxides and diamond; among these, more preferable are boron nitride, aluminum nitride, aluminum oxide, zinc oxide, and diamond. In the synthesis process of the nitrides, the metal oxides and the diamond, a metal such as iron or manganese is often used as a catalyst therefor. Hence, metal impurities are often adhered on the surface of these inorganic fillers, but by using the above specific antioxidant, the oxidative deterioration caused by the metal impurities is suitably prevented and the long-term reliability can be enhanced.

The inorganic filler is preferably a thermal conductive inorganic filler. The thermal conductivity of the inorganic filler is, from the viewpoint of enhancing the thermal conduction, preferably 8 W/(m·K) or higher, more preferably 20 W/(m·K) or higher, and still more preferably 30 W/(m·K) or higher. The upper limit of the thermal conductivity is not especially limited, and is, for example, 2,500 W/(m·K). Then, the thermal conductivity of the inorganic filler can be measured, for example, by a periodic heating thermoreflectance method using a thermal microscope, manufactured by Bethel Co. Ltd., and involving measurement on a particle cross-section cut by a Cross Section Polisher.

The inorganic filler contains, among described above, preferably at least one (hereinafter, referred to as "first filler" in some cases) selected from the group consisting of diamond and cubic boron nitride. The diamond and the cubic boron nitride are, among the inorganic fillers, especially excellent in the thermal conduction, and use of these substances as the inorganic filler makes it easy for the thermal conduction of the resin composition to be enhanced. Then, although on the surface of the diamond and the cubic boron nitride, metal impurities such as manganese are adhered in relatively much amounts, even when the metal impurities are adhered much on the surface, by using the specific antioxidant as described above, the long-term reliability can be enhanced.

The filling rate of the first filler is, based on the total amount of the resin composition, preferably 20% by volume or higher, more preferably 30% by volume or higher, and still more preferably 50% by volume or higher, and then, preferably 80% by volume or lower, more preferably 78% by volume or lower, and still more preferably 75% by volume or lower.

It is preferable that the first filler is either octahedral or truncated octahedral. Since the octahedral or truncated octahedral filler is low in the aspect ratio and excellent in the slidability, it becomes easy for the filler to be packed and it becomes easy for the thermal conductivity to be raised and for the heat dissipation property to be enhanced. The octahedral or truncated octahedral filler is one also called so-called As-Grown particles, and it is desirable to use crystalline particles not having been crushed and retaining the shape when being synthesized.

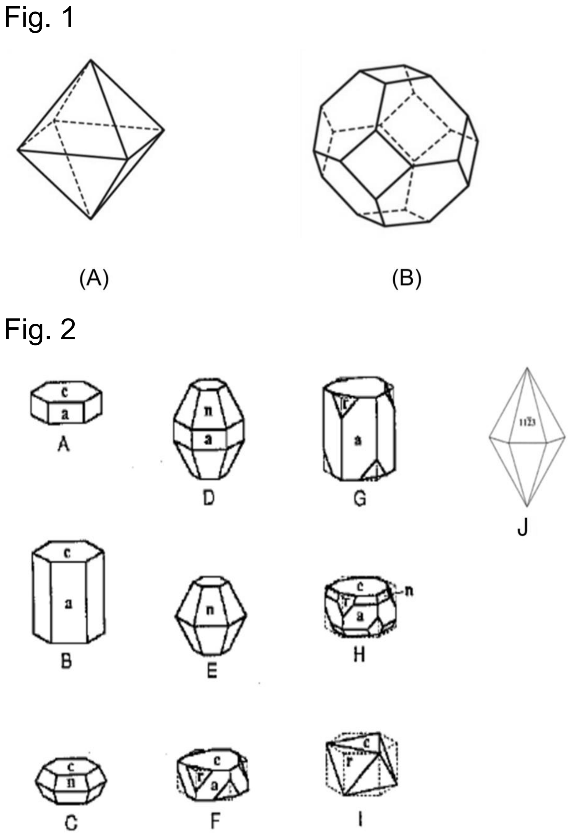

Here, the "octahedral" ideally includes a regular octahedron as indicated in Fig. 1(A), but does not refer to a geometrically strict regular octahedron, and refers to a shape identifiable as a near regular octahedron in the art in visual observation with a microscope or the like. Then, the "truncated octahedron" is a polyhedron having a shape made by cutting vertices of an octahedron (ideally, regular octahedron), and is also called a hexoctahedron. The "truncated octahedron" does not have to be a strict hexoctahedron indicated in Fig. 1(B), and refers to a shape identifiable as a hexoctahedron in the art in visual observation with a microscope or the like.

An octahedral diamond and a truncated octahedral diamond can easily be produced by being synthesized by a high-temperature high-pressure process, and can have a relatively large particle diameter.

Then, the first filler may be one other than an octahedron and a truncated octahedron, and may have, for example, an indeterminate shape. The indeterminate filler includes crushed fillers made by crushing crystalline particles.

The first filler may be used singly in one kind, or may be used concurrently in two or more kinds.

The ratio of the total volume of the octahedron and the truncated octahedron in the first filler is, from the viewpoint of the thermal conduction, with respect to the total volume of the first filler, preferably 30% by volume or higher, more preferably 40% by volume or higher, and still more preferably 50% by volume or higher. The upper limit of the ratio of the total volume of the octahedron and the truncated octahedron is 100% by volume.

The inorganic filler may contain fillers other than the diamond particles and the cubic boron nitride (hereinafter, referred to also as "second filler"). In this case, it is preferable that the inorganic filler contains, in addition to the first filler, the second filler. Specific examples of the second filler are as listed as inorganic fillers other than the diamond and the cubic boron nitride; and among described above, at least either of metal oxides and nitrides is preferable, and among these, more preferable is at least any one of zinc oxide, aluminum oxide, aluminum nitride and boron nitride other than cubic boron nitride. Since the above nitrides and metal oxides are relatively high in the hardness and low in the friction coefficient, it is easy for the slidability to be raised and for the flowability to be enhanced. Further, since these are high also in the thermal conductivity, it becomes easy for the thermal conduction to be enhanced.

The shape of the second filler is not especially limited, and may be any of polyhedral, indeterminate, tabular, globular, acicular, fibrous, tubular shapes, and the like. The polyhedral shape may be the above octahedral shape or truncated octahedral shape, or may be a cubic shape, or may be, as shown in Fig. 2, a polyhedral shape other than the octahedron, the truncated octahedron and the cube. Polyhedral fillers shown in Fig. 2 include fillers having crystal planes of an a plane {1120}, a c plane {0001}, an h plane {1123}, an n plane {2243}, an r plane {1012} and the like. The polyhedral fillers are ones also called so-called As-Grown particles, and are crystalline particles not having been crushed and retaining the shape when being synthesized.

It is preferable that the second filler has a shape of polyhedral other than octahedral and truncated octahedral, tabular, indeterminate, globular, or the like.

It is also preferable that the second filler contains a so-called round filler. Here, the round filler means a filler of 0.75 or higher in sphericity, and among described above, for example, polyhedral fillers and the like can be round fillers. Then, the globular fillers are also one kind of the round fillers. The globular filler may be of a perfect sphere, but is not limited thereto, and in the present description, fillers of 0.95 or higher in sphericity are regarded as globular fillers. Then, the upper limits of the sphericity of the globular fillers and the round fillers are 1.

In the present invention, in the case where the volume proportion of the first filler is high, although a part of the first filler is not packed in some cases, when the inorganic filler contains the so-called round filler as the second filler, it becomes difficult for contact between vertices of the first filler not packed to occur, making it easy for the flowability to be enhanced. Further, use of the round filler makes it easy for the filling rate of the inorganic filler to be raised.

It suffices when the round filler is used by being suitably selected from among described above, but at least either of metal oxides and nitrides is preferable; among these, aluminum oxide and aluminum nitride are more preferable; and aluminum oxide is still more preferable.

The round filler may be used singly in one kind, or may be used concurrently in two or more kinds.

Here, the sphericity of each filler can be determined by examining an electron microscope photograph and calculating (the diameter of a circle whose area is equivalent to a projected area of a particle/the diameter of the smallest circle circumscribing a projected image of the particle) for each filler.

In the resin composition, the filling rate of the round filler as the second filler is, with respect to 100% by volume of the resin composition, preferably 3% by volume or higher, more preferably 5% by volume or higher, and still more preferably 8% by volume or higher. Then, in the resin composition, the round filler is, with respect to 100% by volume of the inorganic filler, preferably 90% by volume or lower, more preferably 70% by volume or lower, and still more preferably 40% by volume or lower.

In the resin composition, the filling rate of the second filler is, with respect to 100% by volume of the resin composition, preferably 5% by volume or higher, more preferably 8% by volume or higher, and still more preferably 10% by volume or higher. Then, in the resin composition, the round filler is, with respect to 100% by volume of the inorganic filler, preferably 90% by volume or lower, more preferably 75% by volume or lower, and still more preferably 45% by volume or lower.

The filling rate of the inorganic filler in the resin composition of the present invention is, based on the total amount of the resin composition, preferably 80% by volume or higher, more preferably 83% by volume or higher, and still more preferably 85% by volume or higher. By making the content of the inorganic filler to be the above lower limit values or higher, it becomes easy for the thermal conduction of the resin composition to be enhanced. Then, when the filling rate of the inorganic filler is made high, although the matrix resin and the like become liable to oxidatively deteriorate due to the influence of metal impurities adhered on the surface of the inorganic filler, in the present invention, due to use of the specific antioxidant, the oxidative deterioration is suppressed and the long-term reliability can be enhanced.

The filling rate of the inorganic filler is, from the viewpoint that the resin and the antioxidant are made to be contained in certain amounts or more and the inorganic filler is made to be suitably dispersed in the matrix resin, preferably 90% by volume or lower, more preferably 88% by volume or lower and still more preferably 87% by volume or lower.

In the present description, the "filling rate" means a % by volume accounted for by something with respect to the total volume of the resin composition; for example, the filling rate of the inorganic filler means a % by volume accounted for by the inorganic filler with respect to the total volume of the resin composition. The total volume of the resin composition is a sum of volumes of all components constituting the resin composition. For example, the volume of the inorganic filler is a sum of volumes of all components (fillers) constituting the inorganic filler. The volume of each component can be calculated from the weight and density of each component.

Although the above filling rate (% by volume) of the inorganic filler can be determined as described above, the volume ratio can also be determined, for example, by separating each component from the resin composition. Specifically, first, a solvent is suitably added to the resin composition to dissolve the resin, or the resin and the antioxidant, and the resin or the resin and the antioxidant are separated from the inorganic filler by a centrifugal separator or the like. Thereafter, the specific gravity and weight of the separated resin or mixture of the resin and the antioxidant are measured, and the volume of the resin or the mixture of the resin and the antioxidant is determined from the measurement values. Similarly, the density and weight of the separated inorganic filler also are measured and the volume of the whole inorganic filler is determined from the measurement values. Then, the separated inorganic filler is separated by kind by a well-known method, and the specific gravity and weight of each inorganic filler are measured and the volume of each inorganic filler is determined from the measurement values, and the % by volume (filling rate) of each inorganic filler can be calculated.

Then, the specific gravity of the separated resin and the like, and the specific gravity of the inorganic filler can be measured by a densitometer (for example, "AccuPyc II1340", manufactured by Shimadzu Corp.) at 23°C.

The average particle diameter of primary particles of the inorganic filler contained in the resin composition of the present invention suffices when being, for example, 400 µm or smaller, and is preferably 200 µm or smaller, more preferably 100 µm or smaller, and still more preferably 70 µm or smaller. By making the average particle diameter of primary particles of the inorganic filler be the above upper limit values or smaller, it becomes possible for the resin composition to be thinned, and it becomes easy for the resin composition to be provided even in narrow gaps in electronic device interiors and the like. The average particle diameter of primary particles of the inorganic filler is, from the viewpoint of securing the thermal conduction of the resin composition, preferably 0.1 µm or larger, and more preferably 0.2 µm or larger.

With regard to the average particle diameter of primary particles of the inorganic filler, the average particle diameter of primary particles of the whole inorganic filler is desirably in the above range, but in the case where the inorganic filler is of two or more kinds, it is preferable that each kind thereof is in the above range. The same applies to the following.

The average particle diameter of primary particles of the first filler is preferably 400 µm or smaller, more preferably 200 µm or smaller, and still more preferably 150 µm or smaller. Then, the average particle diameter of primary particles of the second filler is preferably 200 µm or smaller, more preferably 100 µm or smaller, and still more preferably 70 µm or smaller. By making the average particle diameter of primary particles of the first filler and the second filler to be the above upper limit values or smaller, it becomes possible for the resin composition to be thinned, and it becomes easy for the resin composition to be provided even in narrow gaps in electronic device interiors and the like.

Then, the average particle diameter of primary particles of the first filler is preferably 10 µm or larger and more preferably 20 µm or larger. The average particle diameter of primary particles of the second filler is preferably 0.1 µm or larger and more preferably 0.2 µm or larger. By making the average particle diameters of primary particles of the first filler and the second filler to be the above upper limit values or smaller, it becomes easy for the thermal conduction of the resin composition to be secured.

Then, the average particle diameter of primary particles can be determined by measuring a 50% particle diameter (D50) in a cumulative particle size distribution in terms of volume of the primary particles. The cumulative particle size distribution in terms of volume can be determined by using a laser diffraction/scattering particle size distribution analyzer. The laser diffraction/scattering particle size distribution analyzer includes "MT3300EXII", manufactured by MicrotracBell Corp.

### (Dispersant)

The resin composition of the present invention may contain a dispersant. Use of the dispersant enhances the dispersibility of the inorganic filler and promotes packing of the inorganic filler. It is preferable to use a silane coupling agent as the dispersant.

As the silane coupling agent, for example, an alkoxysilane compound is usable. The alkoxysilane compound is a compound in which 1 to 3 bonds among 4 bonds of a silicon atom (Si) are bound with alkoxy groups and the residual bonds are bound with organic substituents. The alkoxy group of the alkoxysilane compound is a hydrolyzable group, and examples thereof include a methoxy group, an ethoxy group, a propoxy group, a butoxy group, a pentoxy group and a hexatoxy group; among these, the alkoxysilane compound having a methoxy group or an ethoxy group is preferable.

The number of the alkoxy group of the alkoxysilane compound is, from the viewpoint of enhancing the affinity for the inorganic filler such as the diamond, preferably 3. Therefore, the alkoxysilane compound is more preferably at least one kind selected from the group consisting of trimethoxysilane compounds and triethoxysilane compounds.

Examples of a functional group contained in the organic substituent in the alkoxysilane compound include an acryloyl group, alkyl groups, a carboxyl group, a vinyl group, a methacrylic group, aromatic groups, an amino group, an isocyanate group, an isocyanurate group, an epoxy group, a hydroxyl group and a mercapto group.

By suitably selecting the functional group, the compatibility with the resin becomes good. From such a viewpoint, in the case where the resin is the acrylic resin, the functional group is preferably an acryloyl group or a methacrylic group. Then, in the case where the resin is the epoxy resin, the functional group is preferably an epoxy group.

The alkoxysilane compound is, from the viewpoint that it becomes easy for the alkoxysilane compound to become compatible with the resin such as silicone resin or the like and the dispersibility of the fillers is enhanced, preferably an alkylalkoxysilane compound having an alkyl group bound to a silicon atom. The number of carbon atoms of the alkyl group bound to a silicon atom is preferably 4 or larger. Further, the number of carbon atoms of the alkyl group bound to a silicon atom is, from the viewpoint that the viscosity of the alkoxysilane compound itself is relatively low and the viscosity of the resin composition is suppressed low, preferably 16 or smaller.

Preferable alkylalkoxysilane compounds include n-hexyltrimethoxysilane, n-hexyltriethoxysilane, n-octyltriethoxysilane and n-decyltrimethoxysilane.

The alkoxysilane compounds other than the alkylalkoxysilane compounds include 3-acryloxypropyltrimethoxysilane, 3-methacryloxypropyltrimethoxysilane, 3-isocyanatopropyltriethoxysilane, 3-(2-aminoethyl)aminopropyltrimethoxysilane, 3-mercaptopropyltrimethoxysilane, glycidoxypropyltrimethoxysilane, 3-phenylaminopropyltrimethoxysilane and the like.

As the silane coupling agent, a silicone compound having a polar group on an end thereof may be used. Here, the polar group is bound desirably to a Si atom; accordingly, the polar group is preferably a hydrolyzable silyl group such as a silanol group, an alkoxysilyl group or the like, and is more preferably an alkoxysilyl group. It is preferable that the silicone compound having a polar group on an end thereof is used in the case where the resin is the silicone resin.

Due to that the resin composition contains the silicone compound having a polar group on an end thereof as the silane coupling agent, the polar group of the silane coupling agent is bound to or interacts with functional groups present in a minute amount on the surface of the inorganic filler such as the diamond or the like, improving the slidability of the inorganic filler, and making it easy for the inorganic filler to be dispersed in the resin. In particular, the alkoxy group is hydrolyzed and easily reacts with the diamond surface; then, the hydroxyl group interacts with the polar groups on the inorganic filler surface and enters into the inorganic filler interface, making it easy for the slidability to be enhanced.

Further, due to using the silicone compound as the silane coupling agent, in use of the silicone resin as the resin, it becomes easy for the inorganic filler to become especially compatible with the resin, and it becomes easy for the filling rate of the inorganic filler in the resin composition to be increased.

The silicone compound having a polar group on an end thereof is preferably an organopolysiloxane having a hydrolyzable silyl group on a molecular chain end (hereinafter, referred to also as organopolysiloxane (X)). The organopolysiloxane (X) may be a straight-chain one or a branched-chain one, or may be a mixture of a straight-chain one and a branched-chain one, but is preferably a straight-chain type. The organopolysiloxane (X) is preferably an organopolysiloxane having at least one hydrolyzable silyl group on a molecular chain end thereof, more preferably an organopolysiloxane having at least one hydrolyzable silyl group only on one end thereof, and still more preferably an organopolysiloxane having three hydrolyzable silyl groups on one end thereof. Here, the hydrolyzable silyl group is more preferably an alkoxysilyl group and still more preferably a methoxysilyl group.

Due to that the organopolysiloxane (X) has a hydrolyzable silyl group on its end, it becomes easy for the organopolysiloxane (X) to react with or interact with functional groups present on the inorganic filler surface, and it makes easy for the slidability of the inorganic filler to be enhanced. Then, conjointly with having a polysiloxane structure, the dispersibility of the inorganic filler becomes good.

The organopolysiloxane (X) is specifically preferably a compound represented by the following formula (2).

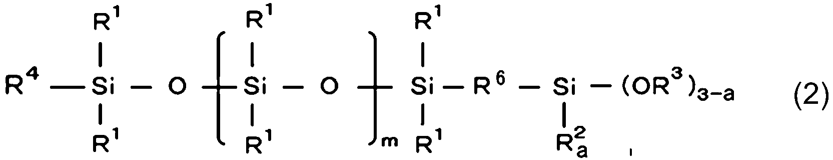

In the formula (2), each R¹ is independently an alkyl group having 1 to 20 carbon atoms, a halogenated alkyl group having 1 to 20 carbon atoms, an aryl group having 6 to 20 carbon atoms or an aralkyl group having 7 to 20 carbon atoms, and the plurality of R¹ may be identical or different from each other; each R² is independently an alkyl group having 1 to 4 carbon atoms, and in the formula (2), in the case where R² is plural, the plurality of R² may be identical or different from each other; each R³ is independently an alkyl group having 1 to 4 carbon atoms, an alkoxyalkyl group having 2 to 4 carbon atoms, a hydrogen atom or an acyl group having 2 to 4 carbon atoms, and in the formula (2), in the case where R³ is plural, the plurality of R³ may be identical or different from each other; R⁴ is an alkyl group having 1 to 8 carbon atoms; R⁶ is an oxygen atom or a divalent organic group having 1 to 40 carbon atoms; the letter of m is an integer of 3 to 315; and the letter of a is an integer of 0 to 2.

In the above formula (2), the alkyl group in R¹ may be a straight-chain one or a branched-chain one, or may have a cyclic structure. The alkyl group more specifically includes straight-chain alkyl groups such as a methyl group, an ethyl group, a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group. an eicosyl group and the like, branched-chain alkyl groups such as an isopropyl group, a tertiary-butyl group, an isobutyl group, 2-methylundecyl group, 1-hexylheptyl group and the like, and cyclic alkyl groups such as a cyclopentyl group, a cyclohexyl group, a cyclododecyl group and the like.

The halogenated alkyl group includes a chloromethyl group, a 3,3,3-trichloropropyl group, and a 3-chloropropyl group and the like. The aryl group includes a phenyl group, a tolyl group xylyl group and the like. The aralkyl group includes a benzyl group, a phenethyl group, a 2-(2,4-6-trimethylphenyl)propyl group and the like.

Among these, R¹ is preferably an alkyl group having 1 to 20 carbon atoms, more preferably an alkyl group having 1 to 4 carbon atoms, and still more preferably a methyl group. In the compound of the formula (2), preferably, 80% or more of R¹ are methyl groups; more preferably, 90% or more thereof; and still more preferably, 100% thereof.

In the above formula (2), R² is an alkyl group having 1 to 4 carbon atoms, and in the case where R² is plural (that is, in the case where the letter of a is 2), the plurality of R² may be identical or different from each other. Further, the alkyl group may be a straight-chain one or a branched-chain one. Among these, R² is preferably an alkyl group having 1 or 2 carbon atoms and more preferably a methyl group. Then, the letter of a is an integer of 0 to 2, and preferably 0 or 1 and more preferably 0.

In the above formula (2), R³ is an alkyl group having 1 to 4 carbon atoms, an alkoxyalkyl group having 2 to 4 carbon atoms, a hydrogen atom or an acyl group having 2 to 4 carbon atoms. In the case where R³ is plural (that is, in the case where the letter of a is 0 or 1), the plurality of R³ may be identical or different from each other. The alkyl group, the alkoxyalkyl group or the acyl group in R³ may be a straight-chain one or a branched-chain one. Among these, R³ is preferably an alkyl group having 1 to 4 carbon atoms and more preferably a methyl group.

In the above formula (2), R⁴ is an alkyl group having 1 to 8 carbon atoms and preferably an alkyl group having 2 to 6 carbon atoms and more preferably a butyl group.

In the above formula (2), R⁶ is preferably a group represented by the following formula (3), an oxygen atom or a divalent hydrocarbon group having 1 to 20 carbon atoms, and more preferably a group represented by the following formula (3) or a divalent hydrocarbon group having 1 to 20 carbon atoms. Here, the divalent hydrocarbon group having 1 to 20 carbon atoms is preferably an alkylene group, and the alkylene group may be a straight-chain one or a branched-chain one. The divalent hydrocarbon group having 1 to 20 carbon atoms is preferably an alkylene group having 2 to 10 carbon atoms, more preferably an alkylene group having 2 to 8 carbon atoms, and still more preferably an alkylene group having 2 to 4 carbon atoms; and examples thereof include a methylene group, an ethylene group, a propylene group, a butylene group and a methylethylene group, and among these, an ethylene group is preferable.

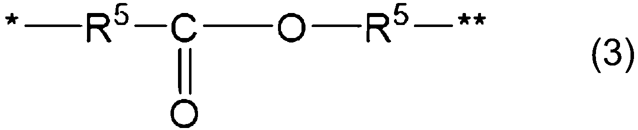

In the formula (3), R⁵ is a divalent hydrocarbon group having 1 to 20 carbon atoms, and the plurality of R⁵ are identical or different from each other. The mark of * is a binding position with a silicon atom in R¹-Si-R¹; and the mark of ** is a binding position with a silicon atom in SiR²ₐ(OR³)₃₋ₐ.

The divalent hydrocarbon group in R⁵ is preferably an alkylene group, and the alkylene group may be a straight-chain one or a branched-chain one. R⁵ is preferably an alkylene group having 2 to 10 carbon atoms, more preferably an alkylene group having 2 to 8 carbon atoms, still more preferably an alkylene group having 2 to 4 carbon atoms, and further still more preferably an alkylene group represented by -CH₂-CH₂-CH₂- or -CH(CH₃)-CH₂-.

The letter of m in the formula (2) denotes a repeating number and is an integer of 3 to 315, and preferably an integer of 4 to 280, more preferably an integer of 5 to 220, and still more preferably an integer of 5 to 100.

As the dispersant, a dispersant other than the silane coupling agent is also usable, and a polymeric dispersant other than the silicone compound is usable. The polymeric dispersant to be used includes polymeric compounds having a functional group. Examples of the polymeric compound include acrylic, vinyl-based, polyester-based, polyurethane-based, polyether-based, epoxy-based, polystyrene-based and amine-based ones. Then, the functional group includes a carboxyl group, a phosphoric acid group, a sulfonic acid group, a carboxylate ester group, a phosphate ester group, a sulfonate ester group, a hydroxyl group, an amino group, quaternary ammonium salt groups and an amido group, and a phosphate ester group is preferable.

It is preferable that the polymeric dispersant other than the silicone compound is used when the matrix resin contains a resin other than the silicone resin, such as an epoxy resin or an acrylic resin.

The functional group of the above-mentioned polymeric dispersant is bound to or interacts with functional groups present in a minute amount on the surface of the diamond and the other inorganic fillers, enhancing the slidability of the inorganic filler, and making it easy for the inorganic filler to be dispersed in the matrix resin. Then, due to that the dispersant is a polymeric compound other than the silicone compound, when a resin component (for example, an epoxy resin or an acrylic resin) other than the silicone resin is used as the matrix resin, it becomes easy for the inorganic filler to become especially compatible with the matrix resin and it becomes easy for the filling rate of the inorganic filler in the resin composition to be increased.

The dispersant may be used singly in one kind among described above, or may be used concurrently in two or more kinds.

The content of the dispersant in the resin composition is, with respect to 100% by mass based on the total mass of the resin components, for example, 1% by mass or higher and 70% by mass or lower. The content of the dispersant in the resin composition is preferably 3% by mass or higher and 40% by mass or lower, and more preferably 5% by mass or higher and 30% by mass or lower. By making the content of the dispersant be a certain value or higher, the dispersant promotes dispersion of the inorganic filler and can fully promote packing of the inorganic filler. Then, by making the content of the dispersant be a certain value or lower, the dispersant can exhibit a disintegration effect of the inorganic filler and it becomes difficult for trouble such as reaggregation of dispersed single particles to be caused. Accordingly, by making the content of the dispersant be in the above desired range, it becomes easy for the thermal conduction to be enhanced.

### (Other additives)

The resin composition, in the case of a curing type, may suitably contain a curing catalyst. For example, in the case of using an addition reaction-curing type silicone resin, the curing catalyst includes platinum-based catalysts, palladium-based catalysts and rhodium-based catalysts. These curing catalysts are catalysts for curing the silicone resin to become the base resin and the silicone resin to become the curing agent. The amount of the curing catalyst to be blended is, in terms of mass with respect to the silicone resins, usually 0.1 to 200 ppm, and preferably 0.5 to 100 ppm. In the case of the two-component curing type, it is preferable that the curing catalyst is blended in the first component containing the base resin, but may be contained in the second component containing the curing agent.

The resin composition of the present invention, as required, may contain additives generally used for heat-dissipating members, such as an antioxidant other than the above specific antioxidant, a colorant, a flame retardant and an antistatic agent. Then, the resin composition, in the case of using a curable resin such as a thermocurable resin, may contain a reaction inhibitor. By inhibiting the catalytic activity and the like by making the reaction inhibitor to be contained, the shelf life and the pot life of the resin composition can be prolonged. The resin composition, in the case of using a photocurable resin, may contain a photopolymerization initiator.

### (Physical properties of the resin composition)

Due to that the resin composition of the present invention contains the inorganic filler, the thermal conductivity is made high and the thermal conduction is made good. The thermal conductivity of the resin composition is preferably 5 W/(m·K) or higher and more preferably 10 W/(m·K) or higher. Then, a higher thermal conductivity of the resin composition gives a better heat dissipation property, but practically, it is desirable that the thermal conductivity is, for example, 25 W/(m·K) or lower.

The long-term reliability in high-temperature environments of the resin composition of the present invention can be enhanced due to that the weight loss rate and the hardness rise rate are suppressed. The weight loss rate of the resin composition is preferably lower than 1%, more preferably 0.7% or lower, and still more preferably 0.5% or lower. Then, the hardness rise rate of the resin composition is preferably lower than 30%, more preferably lower than 20%, and still more preferably lower than 10%. The lower the weight loss rate, the more the long-term reliability can be enhanced; the weight loss rate suffices when being 0% or higher. Also, the lower the hardness rise rate, the more the long-term reliability can be enhanced; the hardness rise rate suffices if being 0% or higher.

Here, the weight loss rate and the hardness rise rate can be measured by the methods described in Examples.

### (Preparation of the resin composition)

The resin composition of the present invention can be prepared by mixing the matrix resin, the antioxidant and the inorganic filler, further, additives such as the dispersant to be blended according to needs, and the like. A method of mixing these components is not especially limited, but the resin composition can be prepared, for example, by adding the antioxidant, the inorganic filler and the additives such as the dispersant to be blended according to needs, and the like to the matrix resin, and thereafter subjecting the resultant to stirring, kneading or the like.

Then, in the case of the two-component curing type, a first component and a second component fabricated by the same method as described above are prepared and the resin composition can be fabricated by mixing the first component and the second component.

The inorganic filler may be surface treated with the dispersant, and then, mixed with the resin and the antioxidant. The in-advance surface treatment of the inorganic filler with the dispersant results in in-advance surface modification with the dispersant. Then, the resin composition can be prepared by mixing the inorganic filler surface treated in advance with the matrix resin and the antioxidant.

A process of the in-advance surface treatment with the dispersant is not especially limited, and a well-known process suffices; for example, a wet treatment process, a dry treatment process or the like are usable. The wet treatment process desirably involves, for example, adding and mixing the inorganic filler to and with a treatment liquid in which the dispersant is dispersed or dissolved in a solvent, and thereafter subjecting the resultant to drying, heat treatment, cleaning and the like to make the dispersant to be bound to or adhered on the inorganic filler surface.

The dry process is a process of surface treatment using no solvent; specifically, the process is one in which the dispersant is mixed in the inorganic filler and stirred by a mixer or the like, and thereafter, heat treated to make the dispersant to be bound to or adhered on the inorganic filler surface.

### [Heat-dissipating member]

The heat-dissipating member of the present invention is one formed of the above-mentioned resin composition. For example, in the case where the resin component contains the curable resin, it is possible to obtain the heat-dissipating member formed into a predetermined shape by forming the resin composition into the predetermined shape and thereafter curing the resin composition with heating the resin composition appropriately or the like. Then, in the case of using the photocurable resin, it is possible to obtain the heat-dissipating member by forming the resin composition into the predetermined shape and thereafter subjecting the resin composition to irradiation with light such as ultraviolet light to cure the resin composition. Also in cases other than the case where the resin component contains the curable resin, it is possible to obtain the heat-dissipating member by forming the resin composition into a predetermined shape, or an indeterminate shape. A method of forming the resin composition into a predetermined shape is not especially limited, and the resin composition may be formed into a thin film shape, a sheet shape, a block shape or the like, or an indeterminate shape, by coating, casting, potting, extrusion or the like. Coating may be carried out, for example, by using a dispenser. Since the resin composition of the present invention is good in the flowability, coating, casting, potting, extrusion or the like can easily be carried out and the dischargeability from the dispenser becomes good.

The heat-dissipating member of the present invention is used, for example, in electronic devices. That is, the present invention provides also an electronic device equipped with the heat-dissipating member. Since the heat-dissipating member of the present invention is high in the thermal conductivity, it can secure the high heat dissipation property when being used inside electronic devices. More specifically, the heat-dissipating member is disposed on an electronic component and used to dissipate heat generated by the electronic component. Then, it is preferable that the heat-dissipating member of the present invention is disposed and used so as to fill a gap between two opposing members. The two opposing members may be, for example, such a combination that one member is an electronic component and the other member is one of a heat sink to dissipate heat from the electronic component, and a housing, a substrate and the like of electronic devices.

### Examples

Hereinafter, the present invention will be described by way of Examples, but the present invention is not any more limited to these Examples.

Measurement methods and evaluation methods of physical properties of the present invention were as follows. Among the physical properties, the measurement results of the average particle diameter of primary particles were as shown in Table 4. The results of measurement and evaluations of the weight loss rate, the hardness rise rate, the storage stability and the thermal conductivity were as shown in Tables 6, 8, 10, 12, 14 and 16.

### [Average particle diameter of primary particles]

The average particle diameter of primary particles of each inorganic filler was determined by measuring a 50% particle diameter (D50) in a cumulative particle size distribution in terms of volume by the method described in the present description.

### [Weight loss rate]

The weight loss rate in the case where 10 g of a resin sheet fabricated in each of Examples and Comparative Examples was heated in an oven at 150°C for 1,000 hours was calculated by the following expression. Weight loss rate (%) = (1-(a weight of the resin composition after being heated/an initial weight of the resin composition)) × 100

Then the weight loss rate of the resin sheet was evaluated according to the following evaluation criteria.

### (Evaluation criteria)

A: the weight loss rate was 0.5% or lower
B: the weight loss rate was higher than 0.5% and 1% or lower
C: the weight loss rate was higher than 1%

### [Hardness rise rate]

The A liquid and the B liquid prepared in each of Examples and Comparative Examples were mixed in the weight ratio of 1/1, and the mixture was heated at 80°C for 30 min to be cured; and the hardness rise rate of the obtained cured material was measured under the following condition. In each of Examples 49 and 50, however, the obtained resin composition was cured under the condition indicated in each Example, and the hardness rise rate of the obtained cured material was measured under the following condition. Then, in each of Examples 48 and 50, a sample was formed from the obtained resin composition and the hardness rise rate was measured under the following condition.
· Environment: a thermostatic chamber (PHH-101, manufactured by Espec Corp.), 150°C/1,000 hours
· Sample size: 50 mm × 25 mm × 6 mm
· Measurement method: according to JIS K6253-3, type E hardness
· Evaluation method: hardness rise rate = ((a hardness after heat resistance test-an initial hardness)/the initial hardness) × 100

Then, the hardness rise rate of the cured material of the resin composition was evaluated according to the following evaluation criteria.
A: the hardness rise rate was lower than 10%
B: the hardness rise rate was 10% or higher and lower than 30%
C: the hardness rise rate was 30% or higher

### [Storage stability]

Respective syringes were filled with the A liquid (first component) and the B liquid (second component) prepared in each of Examples and Comparative Examples , and heated in an oven at 50°C for 1,000 hours, and thereafter returned to room temperature; the A liquid and the B liquid were then mixed in the weight ratio of 1/1 and left at room temperature for 10 min; thereafter, the viscosity of the resultant mixture was measured.

Separately from the above syringes, respective syringes filled with the A liquid and B liquid were prepared, and without being heated as above, the A liquid and the B liquid were mixed in the weight ratio of 1/1 and left at room temperature for 10 min; thereafter, the viscosity of the resultant mixture was measured.

Then, the ratio of these viscosities (the viscosity of the mixture fabricated by being mixed after being heated/the viscosity of the mixture fabricated by being mixed without being heated) was calculated and the storage stability was evaluated according to the following criteria.

### (Evaluation criteria)

A: curable
B: non-curable

### (Evaluation method)

Such a material that the ratio of the viscosities (the viscosity of the mixture fabricated by being heated and thereafter mixed/the viscosity of the mixture fabricated by being mixed without being heated) was 0.8 or higher was taken as being curable. The evaluation of the viscosity was carried out by using a viscometer (BROOKFIELD rotational viscometer) and using a rotator of Spindle No. 14 at a rotation speed of 5 rpm at a measurement temperature of 25°C.

### [Thermal conductivity]

The resin sheet obtained in each of Examples and Comparative Examples was used as a measurement sample, and the thermal conductivity was calculated from a thermal resistance of the sample measured by using an apparatus "DynTIM", manufactured by Menter Graphics Corp. according to ASTM D5470. Here, the thermal resistance was measured for the measurement samples of 500 µm, 1,000 µm and 1,500 µm in thickness.

Then, the thermal conductivity of the resin sheet was evaluated according to the following criteria.

### (Evaluation criteria)

A: 10 W/(m·K) or higher
B: 5 W/(m·K) or higher and lower than 10 W/(m·K)
C: lower than 5 W/(m·K)

A silane coupling agent, antioxidants and inorganic fillers used in Examples and Comparative Examples were as follows.

### (Silane coupling agent)

Decyltrimethoxysialne (product name: KBM3103, manufactured by Shin-Etsu Chemical Co. Ltd.)

### (Antioxidants)

Hindered phenol-based antioxidant 1 (product name: ADK Stab AO-20, manufactured by Adeka Corp.)

Hindered phenol-based antioxidant 2 (product name: ADK Stab AO-30, manufactured by Adeka Corp.)

Hindered phenol-based antioxidant 3 (product name: ADK Stab AO-40, manufactured by Adeka Corp.)

Hindered phenol-based antioxidant 4 (product name: ADK Stab AO-50, manufactured by Adeka Corp.)

Hindered phenol-based antioxidant 5 (product name: ADK Stab AO-60, manufactured by Adeka Corp.)

Hindered phenol-based antioxidant 6 (product name: ADK Stab AO-80, manufactured by Adeka Corp.)

Hindered phenol-based antioxidant 7 (product name: ADK Stab AO-330, manufactured by Adeka Corp.)

Hindered phenol-based antioxidant 8 (product name: SEENOX 224M, manufactured by Shipro Kasei Kaisha, Ltd.)

Hindered phenol-based antioxidant 9 (product name: ADK Stab CDA-10, manufactured by Adeka Corp.)

Hindered phenol-based antioxidant 10 (product name: Irganox 565, manufactured by BASF AG)

### Organic chelate-based antioxidant 1 (product name: ADK Stab CDA-1, manufactured by Adeka Corp.)

Organic chelate-based antioxidant 2 (product name: ADK Stab ZS-27, manufactured by Adeka Corp.)

Organic chelate-based antioxidant 3 (product name: EDTA, manufactured by TCI Co. Ltd.) Organic chelate-based antioxidant 4 (product name: phthalocyanine, manufactured by TCI Co. Ltd.)

### Hydrazide-based antioxidant 1 (product name: ADK Stab CDA-6S, manufactured by Adeka Corp.)

Hydrazide-based antioxidant 2 (a hydrazide derivative, product name: ADK Stab ZS-90, manufactured by Adeka Corp.)

Hydrazide-based antioxidant 3 (a hydrazide derivative, product name: ADK Stab ZS-91, manufactured by Adeka Corp.)

### Phosphorus-based antioxidant 1 (product name: ADK Stab PEP-36, manufactured by Adeka Corp.)

Phosphorus-based antioxidant 2 (product name: ADK Stab HP-10, manufactured by Adeka Corp.)

Phosphorus-based antioxidant 3 (product name: ADK Stab 2112, manufactured by Adeka Corp.)

### Sulfur-based antioxidant 1 (product name: ADK Stab AO-412S, manufactured by Adeka Corp.)

Sulfur-based antioxidant 2 (product name: SEENOX BCS, manufactured by Shipro Kasei Kaisha, Ltd.)

Sulfur-based antioxidant 3 (product name: SEENOX DS, manufactured by Shipro Kasei Kaisha, Ltd.)

Sulfur-based antioxidant 4 (product name: SEENOX DM, manufactured by Shipro Kasei Kaisha, Ltd.)

Sulfur-based antioxidant 5 (product name: SEENOX DL, manufactured by Shipro Kasei Kaisha, Ltd.)

Detailed information of the antioxidants was as shown in Tables 1 to 3.

**[Table 1]**

| **Kind** | **Product Name** | **Maker** | **Structure** | **Molecular Weight** | **Phenol Equivalent** | **Specific Gravity** |
|---|---|---|---|---|---|---|
| **Hindered Phenol-based** | **ADK Stab AO-20** | ADEKA | 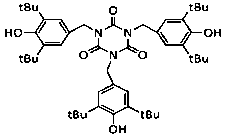 | 784 | 261 | 0.97 |
| | **ADK Stab AO-**30 | ADEKA | 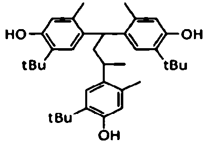 | 545 | 182 | 0.97 |
| | **ADK Stab AO-40** | ADEKA | 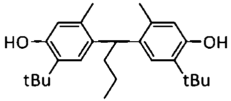 | 383 | 192 | 0.97 |
| | **ADK Stab AO-50** | ADEKA | 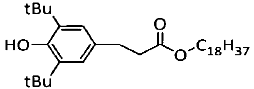 | 531 | 266 | 0.97 |
| | **ADK Stab AO-60** | ADEKA | 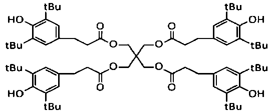 | 1178 | 295 | 0.97 |
| | **ADK** Stab AO-80 | ADEKA | 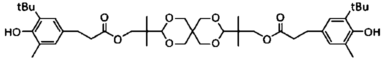 | 741 | 371 | 0.97 |
| | **ADK Stab AO-**330 | ADEKA | 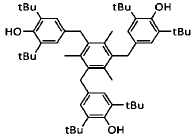 | 775 | 258 | 0.97 |
| | SEENOX **224M** | **Shipro Kasei Kaisha** | 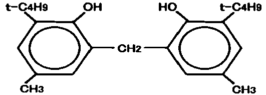 | 341 | 170 | 0.97 |
| | **ADK Stab CDA-10** | ADEKA | 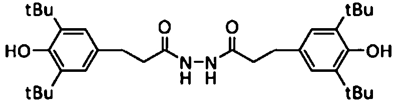 | 553 | 277 | 0.97 |
| | **Irganox 565** | Basf | 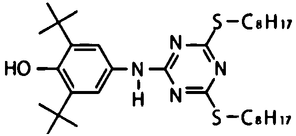 | 589 | 589 | 0.97 |

**[Table 2]**

| Kind | Product Name | Maker | Structure | Molecular Weight | Specific Gravity |
|---|---|---|---|---|---|
| Organic Chelate-based | ADK Stab CDA-1 | ADEKA | 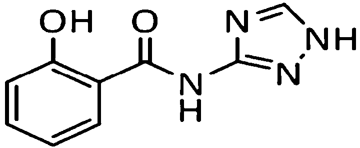 | 204 | 0.97 |
| | ADK Stab ZS-27 | ADEKA | 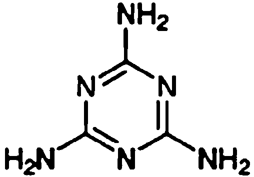 | 126 | 0.97 |
| | EDTA | TCI | 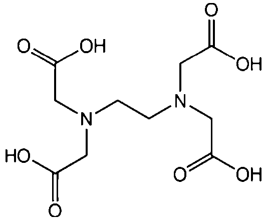 | 292 | 0.97 |
| | Phthalocy anine | TCI | 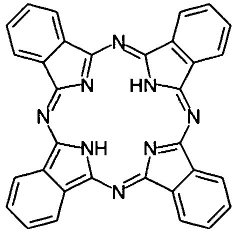 | 515 | 0.97 |
| Hydrazine -based | ADK Stab CDA-6S | ADEKA | 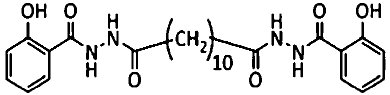 | 498 | 0.97 |
| | ADK Stab CDA-6S | ADEKA | hydrazide derivative | - | 0.97 |
| | ADK Stab ZS-91 | ADEKA | hydrazide derivative | - | 0.97 |

**[Table 3]**

| Kind | Product Name | Maker | Structure | Molecular Weight | Specific Gravity |
|---|---|---|---|---|---|
| Phosphorus -based | ADK Stab PEP-36 | ADEKA | 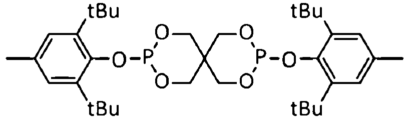 | 633 | 0.97 |
| | ADK Stab HP-10 | ADEKA | 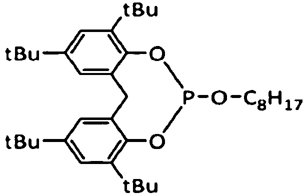 | 583 | 0.97 |
| | ADK Stab 2112 | ADEKA | 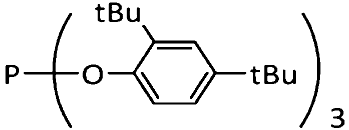 | 647 | 0.97 |
| Sulfur-based | ADK Stab AO-412S | ADEKA | 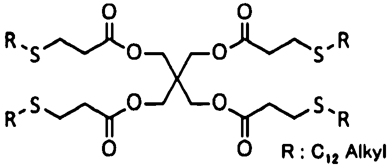 | 1,162 | 0.97 |
| | SEENOX BCS | Shipro Kasei Kaisha | 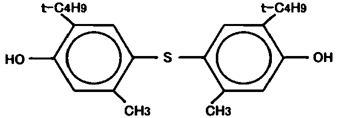 | 358.5 | 0.97 |
| | SEENOXDS | Shipro Kasei Kaisha | 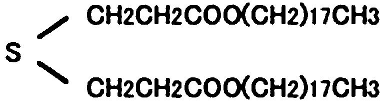 | 683.2 | 0.97 |
| | SEENOX DM | Shipro Kasei Kaisha | 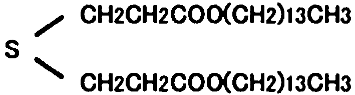 | 571 | 0.97 |
| | SEENOX DL | Shipro Kasei Kaisha | 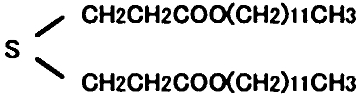 | 514.9 | 0.97 |

### (Inorganic fillers)

Diamond 1 (manufactured by Tomei Diamond Co. Ltd.)
Diamond 2 (manufactured by Tomei Diamond Co. Ltd., crushed filler)

### Cubic boron nitride (manufactured by Tomei Diamond Co. Ltd.)

Alumina 1 (Sumitomo Chemical Co. Ltd.)
Alumina 2 (manufactured by DIC Corp.)
Alumina 3 (manufactured by Adomatex Co. Ltd.)
Alumina 4 (manufactured by Denka Corp.)

### Aluminum nitride (manufactured by Showa Denko K.K.)

Magnesium oxide (manufactured by Sakai Chemical Industry Co. Ltd.) Boron nitride (manufactured by Momentive Performance Materials Co. Ltd.) Zinc oxide (manufactured by Sakai Chemical Industry Co. Ltd.)

### Detailed information of the inorganic fillers was as shown in Table 4.

**[Table 4]**

| Kind | D50(µm) | Maker | Shape |
|---|---|---|---|
| diamond 1 | 54 | Tomei Diamond | truncated octahedron |
| diamond 2 | 25 | Tomei Diamond | indeterminate |
| cubic boron nitride | 54 | Tomei Diamond | truncated octahedron |
| alumina 1 | 3 | Sumitomo Chemical | round |
| alumina 2 | 35 | DIC | tetradecahedron (round) |
| alumina 3 | 0.25 | Admatex | globular |
| alumina 4 | 50 | DENKA | globular |
| aluminum nitride | 50 | Showa Denko | globular |
| MgO | 50 | Sakai Chemical Industry | indeterminate (crushed) |
| BN | 45 | Momentive | tabular (flaky) |
| ZnO | 10 | Sakai Chemical Industry | indeterminate (crushed) |

### [Example 1]

To 13.986 parts by volume of a both-end vinyl-terminated organopolysiloxane (viscosity at 25°C: 100 mPa·s) to constitute a base resin of an addition reaction type silicone resin as a resin, antioxidants and inorganic fillers were added in the formulation indicated in Table 5, and further a platinum catalyst was in a catalytic amount was added to thereby prepare an A liquid of a resin composition.

Then, to 13.986 parts by volume of an organohydrogenpolysiloxane (viscosity at 25°C: 100 mPa·s) to constitute a curing agent of the addition reaction type silicone resin, antioxidants and inorganic fillers were added in the formulation indicated in Table 5 to thereby prepare a B liquid of the resin composition. The A liquid and the B liquid were mixed in a mass ratio (A liquid/B liquid) of 1 : 1 to thereby fabricate the resin composition, which was injected in a forming die and left at room temperature (25°C) for 4 hours to be cured to thereby obtain a resin sheet. The weight loss rate, the hardness rise rate and the thermal conductivity of the resin sheet as a measurement sample were measured. Further, the storage stability of the resin composition right after the mixing of the A liquid and the B liquid was evaluated.

### [Examples 2 to 47, Comparative Examples 1 to 22 and Reference Examples 1 and 2]

The same procedure was carried out as in Example 1, except for changing components used and amounts thereof blended as indicated in Tables 5, 7, 9, 11, 13 and 15. In Example 47, the storage stability was not evaluated.

### [Example 48]

To 13.986 parts by volume of a dimethylsilicone oil (KF96-100cs, manufactured by Shin-Etsu Chemical Co. Ltd.), antioxidants and inorganic fillers were added in the formulation indicated in Table 11 to thereby prepare a resin composition. The weight loss rate and the thermal conductivity of the obtained resin composition as a measurement sample were measured.

### [Example 49]

100 parts by mass of an epoxy resin (trade name: "Epikote 828US", manufactured by Mitsubishi Chemical Corp.), 10 parts by mass of dicyandiamide (manufactured by Tokyo Chemical Industry Co. Ltd.) as a thermocuring agent and 1 part by mass of an imidazole curing agent (trade name: "2MZA-PW", manufactured by Shikoku Chemicals Corp.) were added to prepare a resin mixture. To 13.986 parts by volume of the resin mixture (matrix resin), antioxidants and inorganic fillers were added and mixed in the formulation indicated in Table 11 to thereby prepare a resin composition. The obtained resin composition was injected in a forming die and heated at 180°C for 2 hours to be cured to thereby obtain a resin sheet. The weight loss rate, the hardness rise rate and the thermal conductivity of the resin sheet as a measurement sample were measured.

### [Example 50]

To 13.986 parts by volume of an olefin resin (Sumikasen F723-P, manufactured by Sumitomo Chemical Co. Ltd.), antioxidants and inorganic fillers were added and mixed in the formulation indicated in Table 11 to thereby prepare a resin composition. The obtained resin composition was heated at 130°C and injected in a forming die to be solidified to thereby obtain a resin sheet. The weight loss rate, the hardness rise rate and the thermal conductivity of the resin sheet as a measurement sample were measured.

### [Example 51]

100 parts by mass of an acrylic resin (4-hydroxybutyl acrylate, manufactured by Osaka Organic Chemical Industry Ltd.) and 5 parts by mass of an acrylic resin (CN9005, manufactured by Arkema Co. Ltd.) were mixed. To 12.986 parts by volume of the obtained mixture (resin), 1 part by volume of a photopolymerization initiator (Irgacure OXE01, manufactured by BASF AG) was added and further, antioxidants and inorganic fillers were added and mixed in the formulation indicated in Table 11 to thereby prepare a resin composition. The obtained resin composition was injected in a forming die and irradiated with 365 nm and 20 mW/cm² by a UV lamp for 60 sec to be cured to thereby obtain a resin sheet. The weight loss rate, the hardness rise rate and the thermal conductivity of the resin sheet as a measurement sample were measured.

### [Example 52]

To 13 parts by volume of a both-end vinyl-terminated organopolysiloxane (viscosity at 25°C: 100 mPa·s) to constitute a base resin of an addition reaction type silicone resin as a resin, 0.986 part by volume of a silane coupling agent was added to thereby obtain a mixed composition. To the obtained mixed composition, diamonds and aluminas were added in the formulation indicated in Table 11, and further, a platinum catalyst was added in a catalytic amount to thereby prepare an A liquid of a resin composition.

Then, to 13 parts by volume of an organohydrogenpolysiloxane (viscosity at 25°C: 100 mPa·s) to constitute a curing agent of the addition reaction type silicone resin, 0.986 part by volume of a dispersant was added and mixed to thereby obtain a mixed composition. To the obtained mixed composition, diamonds and aluminas were added in the formulation indicated in Table 1 to thereby prepare a B liquid of the resin composition. The A liquid and the B liquid were mixed in a mass ratio (A liquid/B liquid) of 1 : 1 to thereby fabricate the resin composition, which was injected in a forming die and left at room temperature (25°C) for 4 hours to be cured to thereby obtain a resin sheet. The weight loss rate, the hardness rise rate and the thermal conductivity of the resin sheet as a measurement sample were measured. Further, the storage stability of the resin composition right after the mixing of the A liquid and the B liquid was evaluated.

**[Table 5]**

| | | | | Specific Gravity | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|---|---|
| Formulation (% by volume) | Resin | | silicone 1 | 0.97 | 13.986 | 13.986 | 13.986 | 13.986 | 13.986 | 13.986 | 13.986 | 13.986 | 13.986 | 13.986 | 13.986 | 13.986 | 13.986 |
| | | | silicone 2 | 0.97 | | | | | | | | | | | | | |
| | | | epoxy | 0.97 | | | | | | | | | | | | | |
| | | | olefin | 0.97 | | | | | | | | | | | | | |
| | | | acryl | 0.97 | | | | | | | | | | | | | |
| | Silane coupling agent | | KBM3103 | 0.97 | | | | | | | | | | | | | |
| | Antioxidant | Hindered Phenol- based | ADK Stab AO-20 | 0.97 | 0.004 | | | | | | | | | | 0.004 | | |
| | | | ADK Stab AO-30 | 0.97 | | 0.004 | | | | | | | | | | 0.004 | |
| | | | ADK Stab AO-40 | 0.97 | | | 0.004 | | | | | | | | | | 0.004 |
| | | | ADK Stab AO-50 | 0.97 | | | | 0.004 | | | | | | | | | |
| | | | ADK Stab AO-60 | 0.97 | | | | | 0.004 | | | | | | | | |
| | | | ADK Stab AO-80 | 0.97 | | | | | | 0.004 | | | | | | | |
| | | | ADK Stab AO-330 | 0.97 | | | | | | | 0.004 | | | | | | |
| | | | SEENOX 224M | 0.97 | | | | | | | | 0.004 | | | | | |
| | | | ADK Stab CDA-10 | 0.97 | | | | | | | | | 0.004 | | | | |
| | | | Irganox 565 | 0.97 | | | | | | | | | | 0.004 | | | |
| | | Organic Chelate- based | ADK Stab CDA-1 | 0.97 | | | | | | | | | | | | | |
| | | | ADK Stab ZS-27 | 0.97 | | | | | | | | | | | | | |
| | | | EDTA | 0.97 | | | | | | | | | | | | | |
| | | | Phthalocyanine | 0.97 | | | | | | | | | | | | | |
| | | Hydrazine-based | ADK Stab CDA-6S | 0.97 | 0.010 | 0.010 | 0.010 | 0.010 | 0.010 | 0.010 | 0.010 | 0.010 | 0.010 | 0.010 | | | |
| | | | ADK Stab CDA-6S | 0.97 | | | | | | | | | | | 0.010 | 0.010 | 0.010 |
| | | | ADK Stab ZS-91 | 0.97 | | | | | | | | | | | | | |
| | | Phosphorus-based | ADK Stab PEP-36 | 0.97 | | | | | | | | | | | | | |
| | | | ADK Stab HP-10 | 0.97 | | | | | | | | | | | | | |
| | | | ADK Stab 2112 | 0.97 | | | | | | | | | | | | | |
| | | Sulfur-based | ADK Stab AO-412S | 0.97 | | | | | | | | | | | | | |
| | | | SEENOX BCS | 0.97 | | | | | | | | | | | | | |
| | | | SEENOX DS | 0.97 | | | | | | | | | | | | | |
| | | | SEENOX DM | 0.97 | | | | | | | | | | | | | |
| | | | SEENOX DL | 0.97 | | | | | | | | | | | | | |
| | Inorganic filler | diamond 1 | | 3.52 | 38.670 | 38.670 | 38.670 | 38.670 | 38.670 | 38.670 | 38.670 | 38.670 | 38.670 | 38.670 | 38.670 | 38.670 | 38.670 |
| | | diamond 2 | | 3.52 | 35.330 | 35.330 | 35.330 | 35.330 | 35.330 | 35.330 | 35.330 | 35.330 | 35.330 | 35.330 | 35.330 | 35.330 | 35.330 |
| | | cubic boron nitride | | | | | | | | | | | | | | | |
| | | alumina 1 | | 3.94 | 10.000 | 10.000 | 10.000 | 10.000 | 10.000 | 10.000 | 10.000 | 10.000 | 10.000 | 10.000 | 10.000 | 10.000 | 10.000 |
| | | alumina 2 | | 3.94 | | | | | | | | | | | | | |
| | | alumina 3 | | 3.94 | 2.000 | 2.000 | 2.000 | 2.000 | 2.000 | 2.000 | 2.000 | 2.000 | 2.000 | 2.000 | 2.000 | 2.000 | 2.000 |
| | | alumina 4 | | 3.94 | | | | | | | | | | | | | |
| | | aluminum nitride | | 3.26 | | | | | | | | | | | | | |
| | | MgO | | 3.58 | | | | | | | | | | | | | |
| | | BN | | 2.26 | | | | | | | | | | | | | |
| | | ZnO | | 5.78 | | | | | | | | | | | | | |

**[Table 6]**

| | | | Example 1 | Example 2 | Example 3 | Example 4 | Example 5 | Example 6 | Example 7 | Example 8 | Example 9 | Example 10 | Example 11 | Example 12 | Example 13 |
|---|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 38.670 | 38.670 | 38.670 | 38.670 | 38.670 | 38.670 | 38.670 | 38.670 | 38.670 |
| | | indeterminate | 35.330 | 35.330 | 35.330 | 35.330 | 35.330 | 35.330 | 35.330 | 35.330 | 35.330 | 35.330 | 35.330 | 35.330 | 35.330 |
| | C-BN | truncated octahedron | 0.000 | 0.000 | 0.000 | 0.000 | 0.000 | 0.000 | 0.000 | 0.000 | 0.000 | 0.000 | 0.000 | 0.000 | 0.000 |
| | | round | 10.000 | 10.000 | 10.000 | 10.000 | 10.000 | 10.000 | 10.000 | 10.000 | 10.000 | 10.000 | 10.000 | 10.000 | 10.000 |
| | alumina | tetradecahedron | 0.000 | 0.000 | 0.000 | 0.000 | 0.000 | 0.000 | 0.000 | 0.000 | 0.000 | 0.000 | 0.000 | 0.000 | 0.000 |
| | | globular | 2.000 | 2.000 | 2.000 | 2.000 | 2.000 | 2.000 | 2.000 | 2.000 | 2.000 | 2.000 | 2.000 | 2.000 | 2.000 |
| | AlN | globular | 0.000 | 0.000 | 0.000 | 0.000 | 0.000 | 0.000 | 0.000 | 0.000 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 0.000 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 0.000 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 0.000 | 0.000 | 0.000 |
| | Total | | 86.000 | 86.000 | 86.000 | 86.000 | 86.000 | 86.000 | 86.000 | 86.000 | 86.000 | 86.000 | 86.000 | 86.000 | 86.000 |
| Antioxidant (% by mass, based on total mass of resin components) | Hindered Phenol-based | | 0.029 | 0.029 | 0.029 | 0.029 | 0.029 | 0.029 | 0.029 | 0.029 | 0.029 | 0.029 | 0.029 | 0.029 | 0.029 |
| | Organic Chelate-based | | 0.000 | 0.000 | 0.000 | 0.000 | 0.000 | 0.000 | 0.000 | 0.000 | 0.000 | 0.000 | 0.000 | 0.000 | 0.000 |
| | Hydrazine-based | | 0.071 | 0.071 | 0.071 | 0.071 | 0.071 | 0.071 | 0.071 | 0.071 | 0.071 | 0.071 | 0.071 | 0.071 | 0.071 |
| | Phosphorus-based | | 0.000 | 0.000 | 0.000 | 0.000 | 0.000 | 0.000 | 0.000 | 0.000 | 0.000 | 0.000 | 0.000 | 0.000 | 0.000 |
| | Sulfur-based | | 0.000 | 0.000 | 0.000 | 0.000 | 0.000 | 0.000 | 0.000 | 0.000 | 0.000 | 0.000 | 0.000 | 0.000 | 0.000 |
| | Total | | 0.100 | 0.100 | 0.100 | 0.100 | 0.100 | 0.100 | 0.100 | 0.100 | 0.100 | 0.100 | 0.100 | 0.100 | 0.100 |
| Weight loss rate of resin composition after 150°C/1,000 h (%) | | | A | B | B | B | A | B | A | B | B | B | A | B | B |
| 0.5% or lower; A | | | 0.5 | 0.9 | 0.8 | 0.9 | 0.5 | 0.8 | 0.5 | 0.9 | 0.7 | 0.8 | 0.6 | 0.9 | 0.8 |
| higher than 0.5% and 1% or lower; B | | | | | | | | | | | | | | | |
| higher than 1%; C | | | | | | | | | | | | | | | |
| Hardness rise rate Type E after 150°C/1,000 h (%) | | | A | B | B | B | A | B | A | B | B | B | A | B | B |
| lower than 10%; A | | | | | | | | | | | | | | | |
| lower than 30%; B | | | 8 | 14 | 16 | 15 | 7 | 15 | 7 | 15 | 16 | 15 | 8 | 15 | 14 |
| 30% or higher; C | | | | | | | | | | | | | | | |
| Storage stability | | | A | A | A | A | A | A | A | A | A | A | A | A | A |
| Curable; A | | | | | | | | | | | | | | | |
| Non-curable; B | | | | | | | | | | | | | | | |
| Thermal conductivity (W/mK) | | | 10 | 10 | 10 | 10 | 10 | 10 | 10 | 10 | 10 | 10 | 10 | 10 | 10 |
| 10 or higher; A | | | | | | | | | | | | | | | |
| 5 to lower than 10; B | | | A | A | A | A | A | A | A | A | A | A | A | A | A |
| lower than 5; C | | | | | | | | | | | | | | | |

**[Table 7]**

| | | | | Specific | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|---|---|---|
| Formulation (% by volume) | Resin | | silicone 1 | Gravity 0.97 | 13.986 | 13 986 | 13 986 | 13 986 | 13 986 | 13 986 | 13.986 | 13.986 | 13.986 | 13.986 | 13.986 | 13.986 | 13.986 |
| | | | silicone 2 | 0.97 | | | | | | | | | | | | | |
| | | | epoxy | 0.97 | | | | | | | | | | | | | |
| | | | olefin | 0.97 | | | | | | | | | | | | | |
| | | | acryl | 0.97 | | | | | | | | | | | | | |
| | Silane coupling agent | | KBM3103 | 0.97 | | | | | | | | | | | | | |
| | Antioxidant | Hindered Phenol-based | ADK Stab AO-20 | 0.97 | | | | | | | | 0.004 | | | | | |
| | | | ADK Stab AO-30 | 0.97 | | | | | | | | | 0.004 | | | | |
| | | | ADK Stab AO-40 | 0.97 | | | | | | | | | | 0.004 | | | |
| | | | ADK Stab AO-50 | 0.97 | 0.004 | | | | | | | | | | 0.004 | | |
| | | | ADK Stab AO-60 | 0.97 | | 0.004 | | | | | | | | | | 0.004 | |
| | | | ADK Stab AO-80 | 0.97 | | | 0.004 | | | | | | | | | | 0.004 |
| | | | ADK Stab AO-330 | 0.97 | | | | 0.004 | | | | | | | | | |
| | | | SEENOX 224M | 0.97 | | | | | 0.004 | | | | | | | | |
| | | | ADK Stab CDA-10 | 0.97 | | | | | | 0.004 | | | | | | | |
| | | | Irganox 565 | 0.97 | | | | | | | 0.004 | | | | | | |
| | | Organic Chelate-based | ADK Stab CDA-1 | 0.97 | | | | | | | | | | | | | |
| | | | ADK Stab ZS-27 | 0.97 | | | | | | | | | | | | | |
| | | | EDTA | 0.97 | | | | | | | | | | | | | |
| | | | Phthalocyanine | 0.97 | | | | | | | | | | | | | |
| | | Hydrazine-based | ADK Stab CDA-6S | 0.97 | | | | | | | | | | | | | |
| | | | ADK Stab CDA-6S | 0.97 | 0.010 | 0.010 | 0.010 | 0.010 | 0.010 | 0.010 | 0.010 | | | | | | |
| | | | ADK Stab ZS-91 | 0.97 | | | | | | | | 0.010 | 0.010 | 0.010 | 0.010 | 0.010 | 0.010 |
| | | Phosphorus-based | ADK Stab PEP-36 | 0.97 | | | | | | | | | | | | | |
| | | | ADK Stab HP-10 | 0.97 | | | | | | | | | | | | | |
| | | | ADK Stab 2112 | 0.97 | | | | | | | | | | | | | |
| | | Sulfur-based | ADK Stab AO-412S | 0.97 | | | | | | | | | | | | | |
| | | | SEENOX BCS | 0.97 | | | | | | | | | | | | | |
| | | | SEENOX DS | 0.97 | | | | | | | | | | | | | |
| | | | SEENOX DM | 0.97 | | | | | | | | | | | | | |
| | | | SEENOX DL | 0.97 | | | | | | | | | | | | | |
| | Inorganic filler | diamond 1 | | 3.52 | 38.670 | 38.670 | 38.670 | 38 670 | 38 670 | 38.670 | 38.670 | 38.670 | 38.670 | 38.670 | 38.670 | 38.670 | 38.670 |
| | | diamond 2 | | 3.52 | 35.330 | 35 330 | 35.330 | 35.330 | 35.330 | 35.330 | 35.330 | 35.330 | 35.330 | 35.330 | 35.330 | 35.330 | 35.330 |
| | | cubic boron nitride | | | | | | | | | | | | | | | |
| | | alumina 1 | | 3.94 | 10.000 | 10.000 | 10.000 | 10.000 | 10.000 | 10.000 | 10.000 | 10.000 | 10.000 | 10.000 | 10.000 | 10.000 | 10.000 |
| | | alumina 2 | | 3.94 | | | | | | | | | | | | | |
| | | alumina 3 | | 3.94 | 2.000 | 2.000 | 2.000 | 2.000 | 2.000 | 2000 | 2.000 | 2.000 | 2.000 | 2000 | 2000 | 2.000 | 2.000 |
| | | alumina 4 | | 3.94 | | | | | | | | | | | | | |
| | | aluminum nitride | | 3.26 | | | | | | | | | | | | | |
| | | MgO | | 3.58 | | | | | | | | | | | | | |
| | | BN | | 2.26 | | | | | | | | | | | | | |
| | | ZnO | | 5.78 | | | | | | | | | | | | | |

**[Table 8]**

| | | | Example 14 | Example 15 | Example 16 | Example 17 | Example 18 | Example 19 | Example 20 | Example 21 | Example 22 | Example 23 | Example 24 | Example 25 | Example 26 |
|---|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 38.670 | 38.670 | 38.670 | 38.670 | 38.670 | 38.670 | 38.670 | 38.670 | 38.670 |
| | | indeterminate | 35.330 | 35.330 | 35.330 | 35.330 | 35.330 | 35.330 | 35.330 | 35.330 | 35.330 | 35.330 | 35.330 | 35.330 | 35.330 |
| | C-BN | truncated octahedron | 0.000 | 0.000 | 0.000 | 0.000 | 0.000 | 0.000 | 0.000 | 0.000 | 0.000 | 0.000 | 0.000 | 0.000 | 0.000 |
| | alumina | round | 10.000 | 10.000 | 10.000 | 10.000 | 10.000 | 10.000 | 10.000 | 10.000 | 10.000 | 10.000 | 10.000 | 10.000 | 10.000 |
| | | tetradecahedron | 0.000 | 0.000 | 0.000 | 0.000 | 0.000 | 0.000 | 0.000 | 0.000 | 0.000 | 0.000 | 0.000 | 0.000 | 0.000 |
| | | globular | 2.000 | 2.000 | 2.000 | 2.000 | 2.000 | 2.000 | 2.000 | 2.000 | 2.000 | 2.000 | 2.000 | 2.000 | 2.000 |
| | AlN | globular | 0.000 | 0.000 | 0.000 | 0.000 | 0.000 | 0.000 | 0.000 | 0.000 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 0.000 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 0.000 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 0.000 | 0.000 | 0.000 |
| | Total | | 86.000 | 86.000 | 86.000 | 86.000 | 86.000 | 86.000 | 86.000 | 86.000 | 86.000 | 86.000 | 86.000 | 86.000 | 86.000 |
| Antioxidant (% by mass, based on total mass of resin components) | Hindered Phenol-based | | 0.029 | 0.029 | 0.029 | 0.029 | 0.029 | 0.029 | 0.029 | 0.029 | 0.029 | 0.029 | 0.029 | 0.029 | 0.029 |
| | Organic Chelate-based | | 0.000 | 0.000 | 0.000 | 0.000 | 0.000 | 0.000 | 0.000 | 0.000 | 0.000 | 0.000 | 0.000 | 0.000 | 0.000 |
| | Hydrazine-based | | 0.071 | **0.071** | 0.071 | 0.071 | 0.071 | 0.071 | 0.071 | 0.071 | 0.071 | 0.071 | 0.071 | 0.071 | 0.071 |
| | Phosphorus-based | | 0.000 | 0.000 | 0.000 | 0.000 | 0.000 | 0.000 | 0.000 | 0.000 | 0.000 | 0.000 | 0.000 | 0.000 | 0.000 |
| | Sulfur-based | | 0.000 | 0.000 | 0.000 | 0.000 | 0.000 | 0.000 | 0.000 | 0.000 | 0.000 | 0.000 | 0.000 | 0.000 | 0.000 |
| | Total | | 0.100 | 0.100 | 0.100 | 0.100 | 0.100 | 0.100 | 0.100 | 0.100 | 0.100 | 0.100 | 0.100 | 0.100 | 0.100 |
| Weight loss rate of resin composition after 150°C for 1,000 h (%) | | | B | A | B | A | B | B | B | A | B | B | B | A | B |
| 0.5% or lower, A | | | 0.9 | 0.4 | 0.9 | 0.4 | 0.9 | 0.8 | 0.7 | 0.4 | 0.7 | 0.8 | 0.9 | 0.4 | 0.9 |
| higher than 0.5% and 1% or lower; B | | | | | | | | | | | | | | | |
| higher than 1%; C | | | | | | | | | | | | | | | |
| Hardness rise rate Type E after 150°C/1,000 h (%) | | | B | A | B | A | B | B | B | A | B | B | B | A | B |
| lower than 10%; A | | | | | | | | | | | | | | | |
| lower than 30%; B | | | 16 | 9 | 17 | 7 | 15 | 14 | 16 | 8 | 17 | 18 | 16 | 9 | 16 |
| 30% or higher; C | | | | | | | | | | | | | | | |
| Storage stability | | | A | A | A | A | A | A | A | A | A | A | A | A | A |
| Curable, A | | | | | | | | | | | | | | | |
| Non-curable; B | | | | | | | | | | | | | | | |
| Thermal conductivity (W/mK) | | | 10 | 10 | 10 | 10 | 10 | 10 | 10 | 10 | 10 | 10 | 10 | 10 | 10 |
| 10 or higher, A | | | | | | | | | | | | | | | |
| 5 to lower than 10; B | | | A | A | A | A | A | A | A | A | A | A | A | A | A |
| lower than 5, C | | | | | | | | | | | | | | | |

**[Table 9]**

| | | | | Specific Gravity | Example 27 | Example 28 | Example 29 | Example 30 | Example 31 | Example 32 | Example 33 | Example 34 | Example 35 | Example 36 | Example 37 | Example 38 | Example 39 |
|---|---|---|---|---|---|---|---|---|---|---|---|---|---|---|---|---|---|
| Formulation (% by volume) | Resin | | silicone 1 | 0.97 | 13.986 | 13.986 | 13.986 | 13.986 | 13.986 | 13.986 | 13.986 | 13.986 | 13.986 | 13.986 | 13.986 | 13.986 | 13.986 |
| | | | silicone 2 | 0.97 | | | | | | | | | | | | | |
| | | | epoxy | 0.97 | | | | | | | | | | | | | |
| | | | olefin | 0.97 | | | | | | | | | | | | | |
| | | | acryl | 0.97 | | | | | | | | | | | | | |
| | Silane coupling agent | | KBAO703 | 0.97 | | | | | | | | | | | | | |
| | Antioxidant | | ADK Stab AO-20 | 0.97 | | | | | | | | | | | | | |
| | | | ADK Stab AO-30 | 0.97 | | | | | | | | | | | | | |
| | | | ADK Stab AO-40 | 0.97 | | | | | | | | | | | | | |
| | | | ADK Stab AO-50 | 0.97 | | | | | | | | | | | | | |
| | | | ADK Stab AO-60 | 0.97 | | | | | | | | | | | | | |
| | | | ADK Stab AO-80 | 0.97 | | | | | | | | | | | | | |
| | | | AOK Stab AO-330 | 0.97 | 0.004 | | | | | | | | | | | | |
| | | | SEENOX 224M | 0.97 | | 0.004 | | | | | | | | | | | |
| | | | ADK Stab CDA-10 | 0.97 | | | 0.004 | | | | | | | | | | |
| | | | Irganox 565 | 0.97 | | | | 0.004 | 0.004 | 0.004 | 0.004 | 0.004 | 0.004 | 0.004 | 0.004 | | |
| | | Organic Chelated-based | ADK Stab CDA-1 | 0.97 | | | | | | | | | | | | | |
| | | | ADK Stab ZS-27 | 0.97 | | | | | | | | | | | | | |
| | | | EDTA | 0.97 | | | | | | | | | | | | | |
| | | | Phthalocyanine | 0.97 | | | | | | | | | | | | | |
| | | Hydrazine-based | ADK Stab CDA-6S | 0.97 | | | | | | | | | | | | 0.014 | |
| | | | ADK Stab CDA-6S | 0.97 | | | | | | | | | | | | | 0.014 |
| | | | ADK Stab ZS-91 | 0.97 | 0.010 | 0.010 | 0.010 | 0.010 | 0.010 | 0.010 | 0.010 | 0.010 | 0.010 | 0.010 | 0.010 | | |
| | | Phosphorus-based | ADK Stab PEP-36 | 0.97 | | | | | | | | | | | | | |
| | | | ADK Stab HP-10 | 0.97 | | | | | | | | | | | | | |
| | | | ADK Stab 2112 | 0.97 | | | | | | | | | | | | | |
| | | Sulfur-based | ADK Stab AO-412S | 0.97 | | | | | | | | | | | | | |
| | | | SEENOX BCS | 0.97 | | | | | | | | | | | | | |
| | | | SEENOX DS | 0.97 | | | | | | | | | | | | | |
| | | | SEENOX DM | 0.97 | | | | | | | | | | | | | |
| | | | SEENOX DL | 0.97 | | | | | | | | | | | | | |
| | Inorganic filler | diamond 1 | | 3.52 | 38.670 | 38.670 | 38.670 | 38.670 | | | | | | | | 38.670 | 38.670 |
| | | diamond 2 | | 3.52 | 35.330 | 35.330 | 35.330 | 35.330 | | | | | | | | 35.330 | 35.330 |
| | | cubic boron nitride | | | | | | | 74.000 | 38.670 | 35.330 | | | | | | |
| | | alumina 1 | | 3.94 | 10.000 | 10.000 | 10.000 | 10.000 | 10.000 | 10.000 | 10.000 | 10.000 | 10.000 | 10.000 | 10.000 | 10.000 | 10.000 |
| | | alumina 2 | | 3.94 | | | | | | 35.330 | | 35.330 | 35.330 | 38.670 | | | |
| | | alumina 3 | | 3.94 | 2.000 | 2.000 | 2.000 | 2.000 | 2.000 | 2.000 | 2.000 | 2.000 | 2.000 | 2.000 | 2.000 | 2.000 | 2.000 |
| | | alumina 4 | | 3.94 | | | | | | | 38.670 | | | | 38.670 | | |
| | | aluminum nitride | | 3.26 | | | | | | | | 38.670 | | | | | |
| | | MgO | | 3.58 | | | | | | | | | 38.670 | | | | |
| | | BN | | 2.26 | | | | | | | | | | 35.330 | | | |
| | | ZnO | | 5.78 | | | | | | | | | | | 35.330 | | |

**[Table 10]**

| | | | Example 27 | Example 28 | Example 29 | Example 30 | Example 31 | Example 32 | Example 33 | Example 34 | Example 35 | Example 36 | Example 37 | Example 38 | Example 39 |
|---|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 0.000 | 0.000 | 0.000 | 0.000 | 0.000 | 0.000 | 0.000 | 38.670 | 38.670 |
| | | indeterminate | 35.330 | 35.330 | 35.330 | 35.330 | 0.000 | 0.000 | 0.000 | 0.000 | 0.000 | 0.000 | 0.000 | 35.330 | 35.330 |
| | C-BN | truncated octahedron | 0.000 | 0.000 | 0.000 | 0.000 | 74.000 | 38.670 | 35.330 | 0.000 | 0.000 | 0.000 | 0.000 | 0.000 | 0.000 |
| | alumina | round | 10.000 | 10.000 | 10.000 | 10.000 | 10.000 | 10.000 | 10.000 | 10.000 | 10.000 | 10.000 | 10.000 | 10.000 | 10.000 |
| | | tetradecahedron | 0.000 | 0.000 | 0.000 | 0.000 | 0.000 | 35.330 | 0.000 | 35.330 | 35.330 | 38.670 | 0.000 | 0.000 | 0.000 |
| | | globular | 2.000 | 2.000 | 2.000 | 2.000 | 2.000 | 2.000 | 40.670 | 2.000 | 2.000 | 2.000 | 40.670 | 2.000 | 2.000 |
| | AlN | globular | 0.000 | 0.000 | 0.000 | 0.000 | 0.000 | 0.000 | 0.000 | 38.670 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 38.670 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 35.330 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 35.330 | 0.000 | 0.000 |
| | Total | | 86.000 | 86.000 | 86.000 | 86.000 | 86.000 | 86.000 | 86.000 | 86.000 | 86.000 | 86.000 | 86.000 | 86.000 | 86.000 |
| Antioxidant (% by mass, based on total mass of resin components) | Hindered Phenol-based | | 0.029 | 0.029 | 0.029 | 0.029 | 0.029 | 0.029 | 0.029 | 0.029 | 0.029 | 0.029 | 0.029 | 0.000 | 0.000 |
| | Organic Chelate-based | | 0.000 | 0.000 | 0.000 | 0.000 | 0.000 | 0.000 | 0.000 | 0.000 | 0.000 | 0.000 | 0.000 | 0.000 | 0.000 |
| | Hydrazine-based | | 0.071 | 0.071 | 0.071 | 0.071 | 0.071 | 0.071 | 0.071 | 0.071 | 0.071 | 0.071 | 0.071 | 0.100 | 0.100 |
| | Phosphorus-based | | 0.000 | 0.000 | 0.000 | 0.000 | 0.000 | 0.000 | 0.000 | 0.000 | 0.000 | 0.000 | 0.000 | 0.000 | 0.000 |
| | Sulfur-based | | 0.000 | 0.000 | 0.000 | 0.000 | 0.000 | 0.000 | 0.000 | 0.000 | 0.000 | 0.000 | 0.000 | 0.000 | 0.000 |
| | Total | | 0.100 | 0.100 | 0.100 | 0.100 | 0.100 | 0.100 | 0.100 | 0.100 | 0.100 | 0.100 | 0.100 | 0.100 | 0.100 |
| Weight loss rate of resin composition after 150°C | | | A | B | B | B | A | A | A | A | A | A | A | B | B |
| for 1,000 h (%) | | | | | | | | | | | | | | | |
| 0.5% or lower; A | | | 0.4 | 0.8 | 0.8 | 0.7 | 0.5 | 0.5 | 0.4 | 0.5 | 0.4 | 0.4 | 0.4 | 0.6 | 0.7 |
| higher than 0.5% and 1% or lower; B | | | | | | | | | | | | | | | |
| higher than 1%; C | | | | | | | | | | | | | | | |
| Hardness rise rate Type E after 150°C/1,000 h (%) | | | A | B | B | B | A | A | A | A | A | A | A | B | B |
| lower than 10%; A | | | | | | | | | | | | | | | |
| lower than 30%; B | | | 8 | 17 | 16 | 13 | 8 | 6 | 7 | 6 | 8 | 9 | 8 | 16 | 17 |
| 30% or higher; C | | | | | | | | | | | | | | | |
| Storage stability | | | A | A | A | A | A | A | A | A | A | A | A | A | A |
| Curable; A | | | | | | | | | | | | | | | |
| Non-curable; B | | | | | | | | | | | | | | | |
| Thermal conductivity (W/mK) | | | 10 | 10 | 10 | 10 | 9 | 7 | 7 | 6 | 5 | 5 | 5 | 10 | 10 |
| 10 or higher; A | | | | | | | | | | | | | | | |
| 5 to lower than 10; B | | | A | A | A | A | B | B | B | B | B | B | B | A | A |
| lower than 5; C | | | | | | | | | | | | | | | |

**[Table 11]**

| | | | | Specific Gravity | Example 40 | Example 41 | Example 42 | Example 43 | Example44 | Example 45 | Example 46 | Example 47 | Example 48 | Example 49 | Example 50 | Example 51 | Example 52 |
|---|---|---|---|---|---|---|---|---|---|---|---|---|---|---|---|---|---|
| Formulation (% by volume) | Resin | | silicone 1 | 0.97 | 13.986 | 13.993 | 13.930 | 13.860 | 13.790 | 13.986 | 13.986 | 13.986 | | | | | 13.000 |
| | | | silicone 2 | 0.97 | | | | | | | | | 13.986 | | | | |
| | | | epoxy | 0.97 | | | | | | | | | | 13.986 | | | |
| | | | olefin | 0.97 | | | | | | | | | | | 13.986 | | |
| | | | acryl | 0.97 | | | | | | | | | | | | 12.986 | |
| | Silane coupling agent | | KBM3103 | 0.97 | | | | | | | | | | | | | 0.986 |
| | Antioxidant | Hindered Phenol-based | ADK Stab AO-20 | 0.97 | | | | | | | | | | | | | |
| | | | ADK Stab AO-30 | 0.97 | | | | | | | | | | | | | |
| | | | ADK Stab AO-40 | 0.97 | | | | | | | | | | | | | |
| | | | ADK Stab AO-50 | 0.97 | | | | | | | | | | | | | |
| | | | ADK Stab AO-60 | 0.97 | | | | | | | | | | | | | |
| | | | ADK Stab AO-80 | 0.97 | | | | | | | | | | | | | |
| | | | ADK Stab AO-330 | 0.97 | | 0.002 | 0.020 | 0.040 | 0.060 | 0.010 | 0.007 | 0.001 | 0.004 | 0.004 | 0.004 | 0.004 | 0.004 |
| | | | SEENOX 224M | 0.97 | | | | | | | | | | | | | |
| | | | ADK Stab CDA-10 | 0.97 | | | | | | | | | | | | | |
| | | | Irganox 565 | 0.97 | | | | | | | | | | | | | |
| | | Organic Chelate-based | ADK Stab CDA-1 | 0.97 | | | | | | | | | | | | | |
| | | | ADK Stab ZS-27 | 0.97 | | | | | | | | | | | | | |
| | | | EDTA | 0.97 | | | | | | | | | | | | | |
| | | | Phthalocyanine | 0.97 | | | | | | | | | | | | | |
| | | Hydrazine-based | ADK Stab CDA-6S | 0.97 | | 0.005 | 0.050 | 0.100 | 0.150 | 0.004 | 0.007 | 0.013 | 0.010 | 0.010 | 0.010 | 0.010 | 0.010 |
| | | | ADK Stab CDA-6S | 0.97 | | | | | | | | | | | | | |
| | | | ADK Stab ZS-91 | 0.97 | 0.014 | | | | | | | | | | | | |
| | | Phosphorus-based | ADK Stab PEP-36 | 0.97 | | | | | | | | | | | | | |
| | | | ADK Stab HP-10 | 0.97 | | | | | | | | | | | | | |
| | | | ADK Stab 2112 | 0.97 | | | | | | | | | | | | | |
| | | Sulfur-based | ADK Stab AO-412S | 0.97 | | | | | | | | | | | | | |
| | | | SEENOX BCS | 0.97 | | | | | | | | | | | | | |
| | | | SEENOX DS | 0.97 | | | | | | | | | | | | | |
| | | | SEENOX DM | 0.97 | | | | | | | | | | | | | |
| | | | SEENOX DL | 0.97 | | | | | | | | | | | | | |
| | Inorganic filler | diamond 1 | | 3.52 | 38.670 | 38.670 | 38.670 | 38.670 | 38.670 | 38.670 | 38.670 | 38.670 | 38.670 | 38.670 | 38.670 | 38.670 | 38.670 |
| | | diamond 2 | | 3.52 | 35.330 | 35.330 | 35.330 | 35.330 | 35.330 | 35.330 | 35.330 | 35.330 | 35.330 | 35.330 | 35.330 | 35.330 | 35.330 |
| | | cubic boron nitride | | | | | | | | | | | | | | | |
| | | alumina 1 | | 3.94 | 10.000 | 10.000 | 10.000 | 10.000 | 10.000 | 10.000 | 10.000 | 10.000 | 10.000 | 10.000 | 10.000 | 10.000 | 10.000 |
| | | alumina 2 | | 3.94 | | | | | | | | | | | | | |
| | | alumina 3 | | 3.94 | 2.000 | 2.000 | 2.000 | 2.000 | 2.000 | 2.000 | 2.000 | 2.000 | 2.000 | 2.000 | 2.000 | 2000 | 2000 |
| | | alumina 4 | | 3.94 | | | | | | | | | | | | | |
| | | aluminum nitride | | 3.26 | | | | | | | | | | | | | |
| | | MgO | | 3.58 | | | | | | | | | | | | | |
| | | BN | | 2.26 | | | | | | | | | | | | | |
| | | ZnO | | 5.78 | | | | | | | | | | | | | |

**[Table 12]**

| | | | Example 40 | Example 41 | Example 42 | Example 43 | Example 44 | Example 45 | Example 46 | Example 47 | Example 48 | Example 49 | Example 50 | Example 51 | Example 52 |
|---|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 38.670 | 38.670 | 38.670 | 38.670 | 38.670 | 38.670 | 38.670 | 38.670 | 38.670 |
| | | indeterminate | 35.330 | 35.330 | 35.330 | 35.330 | 35.330 | 35.330 | 35.330 | 35.330 | 35.330 | 35.330 | 35.330 | 35.330 | 35.330 |
| | C-BN | truncated octahedron | 0.000 | 0.000 | 0.000 | 0.000 | 0.000 | 0.000 | 0.000 | 0.000 | 0.000 | 0.000 | 0.000 | 0.000 | 0.000 |
| | alumina | round | 10.000 | 10.000 | 10.000 | 10.000 | 10.000 | 10.000 | 10.000 | 10.000 | 10.000 | 10.000 | 10.000 | 10.000 | 10.000 |
| | | tetradecahedron | 0.000 | 0.000 | 0.000 | 0.000 | 0.000 | 0.000 | 0.000 | 0.000 | 0.000 | 0.000 | 0.000 | 0.000 | 0.000 |
| | | globular | 2.000 | 2.000 | 2.000 | 2.000 | 2.000 | 2.000 | 2.000 | 2.000 | 2.000 | 2.000 | 2.000 | 2.000 | 2.000 |
| | AlN | globular | 0.000 | 0.000 | 0.000 | 0.000 | 0.000 | 0.000 | 0.000 | 0.000 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 0.000 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 0.000 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 0.000 | 0.000 | 0.000 |
| | Total | | 86.000 | 86.000 | 86.000 | 86.000 | 86.000 | 86.000 | 86.000 | 86.000 | 86.000 | 86.000 | 86.000 | 86.000 | 86.000 |
| Antioxidant (% by mass, based on total mass of resin components) | Hindered Phenol-based | | 0.000 | 0.014 | 0.143 | 0.286 | 0.429 | 0.071 | 0.050 | 0.010 | 0.029 | 0.029 | 0.029 | 0.029 | 0.029 |
| | Organic Chelate-based | | 0.000 | 0.000 | 0.000 | 0.000 | 0.000 | 0.000 | 0.000 | 0.000 | 0.000 | 0.000 | 0.000 | 0.000 | 0.000 |
| | Hydrazine-based | | 0.100 | 0.036 | 0.357 | 0.714 | 1.071 | 0.029 | 0.050 | 0.090 | 0.071 | 0.071 | 0.071 | 0.071 | 0.071 |
| | Phosphorus-based | | 0.000 | 0.000 | 0.000 | 0.000 | 0.000 | 0.000 | 0.000 | 0.000 | 0.000 | 0.000 | 0.000 | 0.000 | 0.000 |
| | Sulfur-based | | 0.000 | 0.000 | 0.000 | 0.000 | 0.000 | 0.000 | 0.000 | 0.000 | 0.000 | 0.000 | 0.000 | 0.000 | 0.000 |
| | Total | | 0.100 | 0.050 | 0.500 | 1.000 | 1.500 | 0.100 | 0.100 | 0.100 | 0.100 | 0.100 | 0.100 | 0.100 | 0.100 |
| Weight loss rate of resin composition after 150°C for 1,000 h (%) 0.5% or lower; A higher than 0.5% and 1% or lower; B higher than 1%; C | | | B | B | A | A | B | B | A | A | A | A | A | A | A |
| | | | 0.6 | 0.6 | 0.3 | 0.2 | 0.7 | 0.6 | 0.4 | 0.5 | 0.5 | 0.4 | 0.4 | 0.4 | 0.2 |
| Hardness rise rate Type E after 150°C/1,000 h (%) lower than 10%; A lower than 30%; B 30% or higher; C | | | B | A | A | A | A | B | A | A | - | A | A | A | A |
| | | | 18 | 9 | 6 | 5 | 9 | 13 | 5 | 6 | - | 9 | 8 | 7 | 3 |
| Storage stability Curable; A Non-curable; B | | | A | A | A | A | A | A | A | | - | - | - | - | A |
| Thermal conductivity (W/mK) 10 or higher; A 5 to lower than 10; B lower than 5; C | | | 10 | 10 | 10 | 10 | 10 | 10 | 10 | 10 | 10 | 10 | 10 | 10 | 10 |
| | | | A | A | A | A | A | A | A | A | A | A | A | A | A |

**[Table 13]**

| | | | | Specific Gravity | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|---|---|
| Formulation (% by volume) | Resin | | silicone 1 | 0.97 | 13 986 | 13 986 | 13.986 | 13 986 | 13 986 | 13.986 | 13 986 | 13 986 | 13.986 | 13.986 | 13.986 | 13.986 |
| | | | silicone 2 | 0.97 | | | | | | | | | | | | |
| | | | epoxy | 0.97 | | | | | | | | | | | | |
| | | | olefin | 0.97 | | | | | | | | | | | | |
| | | | acryl | 0.97 | | | | | | | | | | | | |
| | Silane coupling agent | | KBM3103 | 0.97 | | | | | | | | | | | | |
| | Antiondant | Hindered Phenol- based | ADK Stab AO-20 | 0.97 | 0.001 | | | | | | | | | | | |
| | | | ADK Stab AO-30 | 0.97 | | 0.001 | | | | | | | | | | |
| | | | ADK Stab AO-40 | 0.97 | | | 0.001 | | | | | | | | | |
| | | | ADK Stab AO-50 | 0.97 | | | | 0.001 | | | | | | | | |
| | | | ADK Stab AO-60 | 0.97 | | | | | 0.001 | | | | | | | |
| | | | ADK Stab AO-80 | 0.97 | | | | | | 0.001 | | | | | | |
| | | | ADK Stab AO-330 | 0.97 | | | | | | | 0.001 | | | | | |
| | | | SEENOX 224M | 0.97 | | | | | | | | 0.001 | | | | |
| | | | ADK Stab CDA-10 | 0.97 | | | | | | | | | 0.001 | | | |
| | | | Irganox 565 | 0.97 | | | | | | | | | | 0.001 | | |
| | | Organic Chelate- based | ADK Stab CDA-1 | 0.97 | | | | | | | | | | | 0.001 | |
| | | | ADK Stab ZS-27 | 0.97 | | | | | | | | | | | | 0.001 |
| | | | EDTA | 0.97 | | | | | | | | | | | | |
| | | | Phthalocyanine | 0.97 | | | | | | | | | | | | |
| | | Hydrazine-based | ADK Stab CDA-6S | 0.97 | | | | | | | | | | | | |
| | | | ADK Stab CDA-6S | 0.97 | | | | | | | | | | | | |
| | | | ADK Stab ZS-91 | 0.97 | | | | | | | | | | | | |
| | | Phosphorus-based | ADK Stab PEP-36 | 0.97 | | | | | | | | | | | | |
| | | | ADK Stab HP-10 | 0.97 | | | | | | | | | | | | |
| | | | ADK Stab 2112 | 0.97 | | | | | | | | | | | | |
| | | Sulfur-bas ed | ADK Stab AO-412S | 0.97 | | | | | | | | | | | | |
| | | | SEENOX BCS | 0.97 | | | | | | | | | | | | |
| | | | SEENOX DS | 0.97 | | | | | | | | | | | | |
| | | | SEENOX DM | 0.97 | | | | | | | | | | | | |
| | | | SEENOX DL | 0.97 | | | | | | | | | | | | |
| | Inorganic filler | diamond 1 | | 3.52 | 38.670 | 38.670 | 38.670 | 38 670 | 38.670 | 38.670 | 38 670 | 38.670 | 38 670 | 38.670 | 38.670 | 38.670 |
| | | diamond 2 | | 3 52 | 35.330 | 35330 | 35.330 | 35.330 | 35.330 | 35.330 | 35.330 | **35330** | 35.330 | 35.330 | 35.330 | 35.330 |
| | | cubic boron nitride | | | | | | | | | | | | | | |
| | | alumina 1 | | 3.94 | 10.000 | 10.000 | 10.000 | 10.000 | 10.000 | 10.000 | 10.000 | 10.000 | 10.000 | 10.000 | 10.000 | 10.000 |
| | | alumina 2 | | 3.94 | | | | | | | | | | | | |
| | | alumina 3 | | 3.94 | 2.000 | 2.000 | 2.000 | 2.000 | 2000 | 2.000 | 2.000 | 2.000 | 2.000 | 2.000 | 2000 | 2000 |
| | | alumina 4 | | 3.94 | | | | | | | | | | | | |
| | | aluminum nitride | | 3.26 | | | | | | | | | | | | |
| | | MgO | | 3 58 | | | | | | | | | | | | |
| | | BN | | 2.26 | | | | | | | | | | | | |
| | | ZnO | | 5.78 | | | | | | | | | | | | |

**[Table 14]**

| | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 |
|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 38.670 | 38.670 | 38.670 | 38.670 | 38.670 | 38.670 | 38.670 | 38.670 |
| | | indeterminate | 35.330 | 35.330 | 35.330 | 35.330 | 35.330 | 35.330 | 35.330 | 35.330 | 35.330 | 35.330 | 35.330 | 35.330 |
| | C-BN | truncated octahedron | 0.000 | 0.000 | 0.000 | 0.000 | 0.000 | 0.000 | 0.000 | 0.000 | 0.000 | 0.000 | 0.000 | 0.000 |
| | alumina | round | 10.000 | 10.000 | 10.000 | 10.000 | 10.000 | 10.000 | 10.000 | 10.000 | 10.000 | 10.000 | 10.000 | 10.000 |
| | | tetradecahedron | 0.000 | 0.000 | 0.000 | 0.000 | 0.000 | 0.000 | 0.000 | 0.000 | 0.000 | 0.000 | 0.000 | 0.000 |
| | | globular | 2.000 | 2.000 | 2.000 | 2.000 | 2.000 | 2.000 | 2.000 | 2.000 | 2.000 | 2.000 | 2.000 | 2.000 |
| | AlN | globular | 0.000 | 0.000 | 0.000 | 0.000 | 0.000 | 0.000 | 0.000 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 0.000 | 0.000 |
| | Total | | 86.000 | 86.000 | 86.000 | 86.000 | 86.000 | 86.000 | 86.000 | 86.000 | 86.000 | 86.000 | 86.000 | 86.000 |
| Antioxidant (% by mass, based on total mass of resin components) | Hindered Phenol-based | | 0.010 | 0.010 | 0.010 | 0.010 | 0.010 | 0.010 | 0.010 | 0.010 | 0.010 | 0.010 | 0.000 | 0.000 |
| | Organic Chelate-based | | 0.000 | 0.000 | 0.000 | 0.000 | 0.000 | 0.000 | 0.000 | 0.000 | 0.000 | 0.000 | 0.010 | 0.010 |
| | Hydrazine-based | | 0.000 | 0.000 | 0.000 | 0.000 | 0.000 | 0.000 | 0.000 | 0.000 | 0.000 | 0.000 | 0.000 | 0.000 |
| | Phosphorus-based | | 0.000 | 0.000 | 0.000 | 0.000 | 0.000 | 0.000 | 0.000 | 0.000 | 0.000 | 0.000 | 0.000 | 0.000 |
| | Sulfur-based | | 0.000 | 0.000 | 0.000 | 0.000 | 0.000 | 0.000 | 0.000 | 0.000 | 0.000 | 0.000 | 0.000 | 0.000 |
| | Total | | 0.010 | 0.010 | 0.010 | 0.010 | 0.010 | 0.010 | 0.010 | 0.010 | 0.010 | 0.010 | 0.010 | 0.010 |
| Weight loss rate of resin composition after 150°C for 1,000 h (%) 0.5% or lower; A higher than 0.5% and 1% or lower; B higher than 1%; C | | | C | C | C | C | C | C | C | C | C | C | C | C |
| | | | 2.6 | 3.4 | 3.5 | 3.2 | 2.7 | 3.6 | 2.2 | 3.5 | 3.8 | 3.7 | 3.3 | 3.5 |
| Hardness rise rate Type E after 150°C/1,000 h (%) lower than 10%; A **lower than** 30%; B 30% or higher; C | | | C | C | C | C | C | C | C | C | C | C | C | C |
| | | | 32 | 46 | 45 | 42 | 34 | 46 | 31 | 45 | 47 | 44 | 42 | 44 |
| Storage stability Curable; A Non-curable; B | | | A | A | A | A | A | A | A | A | A | A | B | B |
| Thermal conductivity (W/mK) 10 or higher; A 5 to lower than 10; B lower than 5; C | | | 10 | 10 | 10 | 10 | 10 | 10 | 10 | 10 | 10 | 10 | 10 | 10 |
| | | | A | A | A | A | A | A | A | A | A | A | A | A |

**[Table 15]**

| | | | | Specific Gravty | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 | Reference Example 1 | Reference Example 2 |
|---|---|---|---|---|---|---|---|---|---|---|---|---|---|---|---|---|
| Formulation (9% by volume) | Resin | | silicone 1 | 0.97 | 13 986 | 13 986 | 13986 | 13 986 | 13 986 | 13 986 | 13.986 | 13 986 | 13.986 | 13.986 | 100.000 | 14 000 |
| | | | silicone 2 | 0.97 | | | | | | | | | | | | |
| | | | epoxy | 0.97 | | | | | | | | | | | | |
| | | | olefin | 0.97 | | | | | | | | | | | | |
| | | | acryl | 0.97 | | | | | | | | | | | | |
| | Silane coupling agent | | KBM3103 | 0.97 | | | | | | | | | | | | |
| | Antioxidant | Hindered Phenol- based | ADK Stab AO-20 | 0.97 | | | | | | | | | | | | |
| | | | ADK Stab AO-30 | 0.97 | | | | | | | | | | | | |
| | | | ADK Stab AOAO | 0.97 | | | | | | | | | | | | |
| | | | ADK Stab AO-50 | 0.97 | | | | | | | | | | | | |
| | | | ADK Stab AO-60 | 0.97 | | | | | | | | | | | | |
| | | | ADK Stab AO-80 | 0.97 | | | | | | | | | | | | |
| | | | ADK Stab AO-330 | 0.97 | | | | | | | | | | | | |
| | | | SEENOX 224M | 0.97 | | | | | | | | | | | | |
| | | | ADK Stab CDA-10 | 0.97 | | | | | | | | | | | | |
| | | | Irganox 565 | 0.97 | | | | | | | | | | | | |
| | | Organic Chelate- based | ADK Stab CDA-1 | 0.97 | | | | | | | | | | | | |
| | | | ADK Stab ZS-27 | 0.97 | | | | | | | | | | | | |
| | | | EDTA | 0.97 | 0.001 | | | | | | | | | | | |
| | | | Phthalocyanine | 0.97 | | 0.001 | | | | | | | | | | |
| | | Hydrazne-based | ADK Stab CDA-6S | 0.97 | | | | | | | | | | | | |
| | | | ADK Stab CDA-6S | 0.97 | | | | | | | | | | | | |
| | | | ADK Stab ZS-91 | 0.97 | | | | | | | | | | | | |
| | | Phosphorus-based | ADK Stab PEP-36 | 0.97 | | | 0.001 | | | | | | | | | |
| | | | ADK Stab HP-10 | 0.97 | | | | 0.001 | | | | | | | | |
| | | | ADK Stab 2112 | 0.97 | | | | | 0.001 | | | | | | | |
| | | Sulfur-based | ADK Stab AO-412S | 0.97 | | | | | | 0.001 | | | | | | |
| | | | SEENOX BCS | 0.97 | | | | | | | 0.001 | | | | | |
| | | | SEENOX DS | 0.97 | | | | | | | | 0.001 | | | | |
| | | | SEENOX DM | 0.97 | | | | | | | | | 0.001 | | | |
| | | | SEENOX DL | 0.97 | | | | | | | | | | 0.001 | | |
| | Inorganic filler | diamond 1 | | 3 52 | 38 670 | 38.670 | 38.670 | 38 670 | 38 670 | 38 670 | 38.670 | 38.670 | 38.670 | 38.670 | | 38.670 |
| | | diamond 2 | | 3 52 | 35.330 | 35 330 | 35.330 | 35.330 | 35.330 | 35.330 | 35.330 | 35.330 | 35.330 | 35.330 | | 35.330 |
| | | cubic boron nitride | | | | | | | | | | | | | | |
| | | alumina 1 | | 3.94 | 10.000 | 10.000 | 10.000 | 10.000 | 10.000 | 10.000 | 10.000 | 10.000 | 10.000 | 10.000 | | 10.000 |
| | | alumina 2 | | 3.94 | | | | | | | | | | | | |
| | | alumina 3 | | 3.94 | 2.000 | 2.000 | 2.000 | 2.000 | 2000 | 2.000 | 2000 | 2.000 | 2.000 | 2000 | | 2000 |
| | | alumina 4 | | 3.94 | | | | | | | | | | | | |
| | | aluminum nitride | | 321 | | | | | | | | | | | | |
| | | MgO | | 3 58 | | | | | | | | | | | | |
| | | BN | | 2.26 | | | | | | | | | | | | |
| | | ZnO | | 5.78 | | | | | | | | | | | | |

| | | | | | | | | | | | | | | | | |
|---|---|---|---|---|---|---|---|---|---|---|---|---|---|---|---|---|
| Note: In Tables 5, 7, 9, 11, 13 and 15, silicone 1 denotes a both-end vinyl-terminated organopolysiloxane to constitute a base resin of an addition reaction type silicone resin, or an organohydrogenpolysiloxane to constitute a curing agent of the silicone resin. Then, in the Tables, silicone 2 denotes a dimethylsilicone oil. | | | | | | | | | | | | | | | | |

**[Table 16]**

| | | | Comparative Example 13 | Comparative Example 14 | Comparative Example 15 | Comparative Example 16 | Comparative Example 17 | Comparative Example 18 | Comparative Example 19 | Comparative Example 20 | Comparative Example 21 | Comparative Example 22 | Reference Example 1 | Reference Example 2 |
|---|---|---|---|---|---|---|---|---|---|---|---|---|---|---|
| Filler filling fraction (% by volume, based on composition total amount) | diamond | truncated octahedron | 38.670 | 38.670 | 38.670 | 38.670 | 38.670 | 38.670 | 38.670 | 38.670 | 38.670 | 38.670 | 0.000 | 38.670 |
| | | indeterminate | 35.330 | 35.330 | 35.330 | 35.330 | 35.330 | 35.330 | 35.330 | 35.330 | 35.330 | 35.330 | 0.000 | 35.330 |
| | C-BN | truncated octahedron | 0.000 | 0.000 | 0.000 | 0.000 | 0.000 | 0.000 | 0.000 | 0.000 | 0.000 | 0.000 | 0.000 | 0.000 |
| | alumina | round | 10.000 | 10.000 | 10.000 | 10.000 | 10.000 | 10.000 | 10.000 | 10.000 | 10.000 | 10.000 | 0.000 | 10.000 |
| | | tetradecahedron | 0.000 | 0.000 | 0.000 | 0.000 | 0.000 | 0.000 | 0.000 | 0.000 | 0.000 | 0.000 | 0.000 | 0.000 |
| | | globular | 2.000 | 2.000 | 2.000 | 2.000 | 2.000 | 2.000 | 2.000 | 2.000 | 2.000 | 2.000 | 0.000 | 2.000 |
| | AlN | globular | 0.000 | 0.000 | 0.000 | 0.000 | 0.000 | 0.000 | 0.000 | 0.000 | 0.000 | 0.000 | 0.000 | 0.000 |
| | MgO | indeterminate | 0.000 | 0.000 | 0.000 | 0.000 | 0.000 | 0.000 | 0.000 | 0.000 | 0.000 | 0.000 | 0.000 | 0.000 |
| | BN | tabular | 0.000 | 0.000 | 0.000 | 0.000 | 0.000 | 0.000 | 0.000 | 0.000 | 0.000 | 0.000 | 0.000 | 0.000 |
| | ZnO | indeterminate | 0.000 | 0.000 | 0.000 | 0.000 | 0.000 | 0.000 | 0.000 | 0.000 | 0.000 | 0.000 | 0.000 | 0.000 |
| | Total | | 86.000 | 86.000 | 86.000 | 86.000 | 86.000 | 86.000 | 86.000 | 86.000 | 86.000 | 86.000 | 0.000 | 86.000 |
| Antioxidant (% by mass, based on total mass of resin components) | Hindered Phenol-based | | 0.000 | 0.000 | 0.000 | 0.000 | 0.000 | 0.000 | 0.000 | 0.000 | 0.000 | 0.000 | 0.000 | 0.000 |
| | Organic Chelate-based | | 0.010 | 0.010 | 0.000 | 0.000 | 0.000 | 0.000 | 0.000 | 0.000 | 0.000 | 0.000 | 0.000 | 0.000 |
| | Hydrazine-based | | 0.000 | 0.000 | 0.000 | 0.000 | 0.000 | 0.000 | 0.000 | 0.000 | 0.000 | 0.000 | 0.000 | 0.000 |
| | Phosphorus-based | | 0.000 | 0.000 | 0.010 | 0.010 | 0.010 | 0.000 | 0.000 | 0.000 | 0.000 | 0.000 | 0.000 | 0.000 |
| | Sulfur-based | | 0.000 | 0.000 | 0.000 | 0.000 | 0.000 | 0.010 | 0.010 | 0.010 | 0.010 | 0.010 | 0.000 | 0.000 |
| | Total | | 0.010 | 0.010 | 0.010 | 0.010 | 0.010 | 0.010 | 0.010 | 0.010 | 0.010 | 0.010 | 0.000 | 0.000 |
| Weight loss rate of resin composition after 150° C/1,000 h (%) 0.5% or lower; A higher than 0.5% and 1% or lower; B higher than 1%; C | | | C | C | C | C | C | C | C | C | C | C | A | C |
| | | | 3.3 | 3 | 3.6 | 3.5 | 3.6 | 3.7 | 3.8 | 3.7 | 3.6 | 3.8 | 0.1 | 5.2 |
| Hardness rise rate Type E after 150°C/1,000 h (%) lower than 10%; A lower than 30%; B 30% or higher; C | | | C | C | C | C | C | C | C | C | C | C | A | C |
| | | | 43 | 37 | 45 | 46 | 47 | 46 | 45 | 48 | 45 | 44 | 2 | 56 |
| Storage stability Curable; A Non-curable; B | | | B | B | B | B | B | B | B | B | B | B | A | A |
| Thermal conductivity(W/mK) 10 or higher; A 5 to lower than 10; B lower than 5; C | | | 10 | 10 | 10 | 10 | 10 | 10 | 10 | 10 | 10 | 10 | 1 | 10 |
| | | | A | A | A | A | A | A | A | A | A | A | C | A |

Due to that the above resin compositions of Examples contained specific antioxidants, the evaluation results of any of the weight loss rate, the hardness rise rate and the storage stability were good and the long-term reliability in high-temperature environments could be enhanced. Further, the compositions were also excellent in the thermal conduction.

By contrast, since the resin compositions fabricated in Comparative Examples contained no specific antioxidants, the evaluation results at least for the weight loss rate and the hardness rise rate were poor, and resultantly, the long-term reliability in high-temperature environments could not be enhanced.

Then, the resin composition fabricated in Reference Example 1 contained no inorganic filler and did not give excellent thermal conduction. Further, the resin composition fabricated in Reference Example 2 contained no antioxidant at all, and the evaluation results for the weight loss rate and the hardness rise rate became poor and resultantly, the long-term reliability in high-temperature environments could not be enhanced.

## Claims

1. A resin composition, comprising: a matrix resin, an inorganic filler and an antioxidant, the antioxidant being either of a hydrazide-based antioxidant or a combination of a hindered phenol-based antioxidant and a chelate-based antioxidant.

2. The resin composition according to claim 1, wherein the chelate-based antioxidant is a hydrazide-based antioxidant.

3. The resin composition according to claim 1 or 2, wherein the matrix resin has an alkyl group on a side chain of a molecule thereof.

4. The resin composition according to claim 1 or 2, wherein the inorganic filler comprises at least one selected from the group consisting of diamond and cubic boron nitride.

5. The resin composition according to claim 1 or 2, wherein the matrix resin is at least one selected from the group consisting of a silicone resin, an epoxy resin and an acrylic resin.

6. A heat-dissipating member, being formed of the resin composition according to claim 1 or 2.

7. An electronic device, comprising an electronic component and the heat-dissipating member according to claim 6 disposed on the electronic component.
